# EUROPEAN PATENT SPECIFICATION

(11) **EP 4 364 224 B1**
(45) Date of publication and mention of the grant of the patent: **09.04.2025**
(21) Application number: 22747490.5
(22) Date of filing: 28.06.2022
(51) Int. Cl.: H01M 10/04, H01M 10/42, H01M 10/44

(54) **CARRIER ION LOADING OF SECONDARY BATTERIES UTILIZING AUXILIARY ELECTRODES**
LADUNG VON TRÄGERIONEN FÜR SEKUNDÄRBATTERIEN MIT HILFSELEKTRODEN
CHARGEMENT D'IONS PORTEURS DE BATTERIES SECONDAIRES AU MOYEN D'ÉLECTRODES AUXILIAIRES

(30) Priority: 30.06.2021 US 202163216656 P
(43) Date of publication of application: 08.05.2024
(73) Proprietor: Enovix Corporation, Fremont, CA 94538 (US)
(72) Inventor: MANDALAM, Aditya, Fremont, California 94538 (US); CONTRERAS, Richard J., Fremont, California 94538 (US); SHAH, Nirav S., Fremont, California 94538 (US); SINGH, Neelam, Fremont, California 94538 (US); DVOIRIS, Ilya, Fremont, California 94538 (US); RAMASUBRAMANIAN, Murali, Fremont, California 94538 (US); BUSACCA, Robert S., Fremont, California 94538 (US); SPOTNITZ, Robert M., Fremont, California 94538 (US); MOODY, James, Fremont, California 94538 (US); VALDES, Bruno A., Fremont, California 94538 (US); LEE, Kim Han, Fremont, California 94538 (US)
(74) Representative: Haley Guiliano International LLP
(86) International application number: PCT/US2022/035282
(87) International publication number: WO 2023/278417

(56) References cited:
- JP-A- 2017 208 177
- US-A1- 2017 155 167
- US-A1- 2018 151 920

## Description

### CROSS-REFERENCE TO RELATED APPLICATIONS

This application claims priority to U.S. Provisional Patent Application No. 63/216,656, filed June 30, 2021.

### FIELD

The field of the disclosure relates generally to secondary batteries, and more specifically, to carrier ion loading of secondary batteries during or subsequent to formation.

### BACKGROUND

In rocking-chair battery cells, both a positive electrode and a negative electrode of a secondary battery comprises materials into which carrier ions, such as lithium, inserts and extracts. As the battery is discharged, carrier ions are extracted from the negative electrode and inserted into the positive electrode. As the battery is charged, the carrier ions are extracted from the positive electrode and inserted into the negative electrode.

Silicon has become a promising candidate to replace carbonaceous materials as the anode because of its high specific capacity. For instance, graphite anodes formed from LiC₆ may have a specific capacity of about 370 milli-amp hours per gram (mAh/g), while crystalline silicon anodes formed from Li₁₅Si₄ may have a specific capacity of about 3600 mAh/g, a nearly 10 fold increase over graphite anodes. However, the use of silicon anodes has been limited, due to the large volumetric changes (e.g., 300%) in silicon when Li carrier ions are inserted into silicon anodes. This volumetric increase along with the cracking and pulverization associated with the charge and discharge cycles has limited the use of silicon anodes in practice. In addition, the use of silicon anodes has been limited due to its poor initial columbic efficiency (ICE), which leads to a capacity loss during the initial formation of secondary batteries that utilize silicon anodes.

US 2017/155167 A1 describes a stacked electrode body of a lithium ion secondary battery which has an end surface parallel to the stacked direction of the positive electrode, the negative electrode and the separator. The end surface is opposed to the third electrode to dope Li ions into the negative electrode. (1) When the lithium ion secondary battery is discharged at a discharge current rate of 0.1 C to reach a voltage reaches 2.0V, a molar ratio (Li/M) of the Li and the metal M other than Li included in the positive electrode active material is 0.8 to 1.05, or (2) the third electrode includes a Li supply source arranged such that the Li supply source is opposed to the end surface of the stacked electrode body, and the negative electrode can be doped with Li ions supplied from the Li supply source when an electrical connection to the third electrode is provided.

JP 2017 208177 A describes a power storage element having a non-facing portion where an active material layer of a negative electrode does not face an active material layer of a positive electrode further includes an ion supply material S including ions to be supplied to the non-facing portion while the ion supply material is electrically connected to a case.

US 2018/151920 A1 describes a method for activating a secondary battery having a negative electrode, a positive electrode, and a microporous separator between the negative and positive electrodes permeated with carrier-ion containing electrolyte, the negative electrode having anodically active silicon or an alloy thereof. The method includes transferring carrier ions from the positive electrode to the negative electrode to at least partially charge the secondary battery, and transferring carrier ions from an auxiliary electrode to the positive electrode, to provide the secondary battery with a positive electrode end of discharge voltage V_{pos,eod} and a negative electrode end of discharge voltage V_{neg,eod} when the cell is at a predefined V_{cell,eod} value, the value of V_{pos,eod} corresponding to a voltage at which the state of charge of the positive electrode is at least 95% of its coulombic capacity and V_{neg,eod} is at least 0.4 V (vs Li) but less than 0.9 V (vs Li).

It is therefore desirable to improve the performance of secondary batteries that utilize silicon-based anodes, and more specifically, to mitigate the issues that silicon anodes exhibit with respect to their poor ICE.

### BRIEF DESCRIPTION

In one aspect, an auxiliary electrode for a secondary battery includes a conductive layer, a first carrier ion supply layer, and a second carrier ion supply layer. The conductive layer has a first major surface in an X-Y plane, and the conductive layer includes a material that is electrically conductive and has a first surface area. Each of the first carrier ion supply layer and the second carrier ion supply layer includes a material that supplies carrier ions for an electrode of the secondary battery. The first carrier ion supply layer covers a first region of the first major surface of the conductive layer and the second carrier ion supply layer covers a second region of the first major surface of the conductive layer. The first region and the second region are separated by a third region of the conductive layer extending between the first region and the second region. The third region is configured to be folded along a Y-axis direction such that in a folded configuration, the first region and the second region are substantially parallel. The third region is substantially perpendicular to the first region and the second region in the folded configuration; and a separator layer is disposed on the first carrier ion supply layer and the second carrier ion supply layer.

In another aspect, a buffering system includes a secondary battery, an auxiliary electrode, and an enclosure. The secondary battery has major surfaces that oppose each other and electrical terminals, with each of the electrical terminals coupled to one of a positive electrode and a negative electrode of the secondary battery. The secondary battery includes a microporous separator between the negative electrode and the positive electrode that is permeated with an electrolyte in ionic contact with the negative electrode and the positive electrode. The negative electrode includes anodically active silicon or an alloy thereof, and the negative electrode has a coulombic capacity for carrier ions. The positive electrode includes a cathodically active material, and the positive electrode has a coulombic capacity for the carrier ions. The negative electrode coulombic capacity exceeds the positive electrode coulombic capacity. The auxiliary electrode contacts the major surfaces of the secondary battery. The auxiliary electrode includes a first separator layer, a conductive layer, a population of carrier ion supply layers, a second separator layer, and a conductive tab. The first separator layer includes a material that is ionically permeable. The conductive layer includes a material that is electrically conductive, and the conductive layer has a first surface contacting the first separator layer and a second surface opposing the first surface. The second surface is segmented into a first region disposed at a first end of the conductive layer, a second region disposed at a second end of the conductive layer that opposes the first end, and a third region disposed between the first region and the second region. The population of carrier ion supply layers each include a material that supplies the carrier ions for the positive electrode of the secondary battery. A respective one of the carrier ion supply layers are disposed within the first region and the second region of the conductive layer. The second separator layer includes a material that is ionically permeable. The second separator layer separates the carrier ion supply layers within the first region and the second region of the conductive layer from the major surfaces of the secondary battery. The conductive tab includes a material that is electrically conductive. The conductive tab has a first end coupled to the second surface of the conductive layer within the third region of the conductive layer, and a second end distal to the first end. The enclosure encapsulates the auxiliary electrode and the secondary battery, with the electrical terminals and the second end of the conductive tab electrically extending from a perimeter of the enclosure.

**In** yet another aspect, a method of buffering a secondary battery with carrier ions using an auxiliary electrode is provided. The secondary battery has major surfaces that oppose each other and electrical terminals. The method includes placing the auxiliary electrode in contact with the major surfaces of the secondary battery to form an auxiliary subassembly. Each of the electrical terminals is coupled to one of a positive electrode and a negative electrode of the secondary battery. The secondary battery includes a microporous separator between the negative electrode and the positive electrode that is permeated with an electrolyte in ionic contact with the negative electrode and the positive electrode. The negative electrode includes anodically active silicon or an alloy thereof, and the negative electrode has a coulombic capacity for carrier ions. The positive electrode includes a cathodically active material, and the positive electrode has a coulombic capacity for the carrier ions. The negative electrode coulombic capacity exceeds the positive electrode coulombic capacity. The auxiliary electrode includes an electrically conductive layer, carrier ion supply layers disposed on the electrically conductive layer that are proximate to the major surfaces of the secondary battery, a separator layer disposed between the carrier ion supply layers and the major surfaces of the secondary battery, and an electrically conductive tab coupled to the electrically conductive layer. The method further includes installing the auxiliary subassembly in an enclosure, where the electrical terminals of the secondary battery and the electrically conductive tab of the auxiliary electrode electrically extend from a perimeter of the enclosure. The method also includes transferring the carrier ions from the positive electrode to the negative electrode to at least partially charge the secondary battery by applying a potential voltage across the electrical terminals of the secondary battery. The method further includes transferring the carrier ions from the carrier ion supply layers of the auxiliary electrode to at least one of the positive electrode and the negative electrode of the secondary battery by applying a potential voltage across the electrically conductive tab of the auxiliary electrode and one of the electrical terminals of the secondary battery. The method further includes transferring the carrier ions from the positive electrode to the negative electrode to charge the secondary battery by applying a potential voltage across the electrical terminals of the secondary battery until the negative electrode has greater than 100% of the positive electrode coulombic capacity stored as the carrier ions.

Various refinements exist of the features noted in relation to the above-mentioned aspects. Further features may also be incorporated in the above-mentioned aspects. These refinements and additional features may exist individually or in any combination. The scope of protection is defined by the appended claims.

### BRIEF DESCRIPTION OF THE DRAWINGS

FIG. 1 is a perspective view of a secondary battery of an exemplary embodiment.
FIG. 2 depicts a unit cell for the secondary battery of FIG. 1.
FIG. 3 depicts a cathode structure for the unit cell of FIG. 2.
FIG. 4 depicts an anode structure for the unit cell of FIG. 2.
FIG. 5 depicts a perspective view of a buffer system of an exemplary embodiment.
FIG. 6 depicts an exploded view of the buffer system of FIG. 5.
FIG. 7 depicts a perspective view of an auxiliary electrode of an exemplary embodiment.
FIG. 8 depicts an exploded view of the auxiliary electrode of FIG. 7.
FIG. 9 is a perspective view of the auxiliary electrode of FIG. 7 at a stage in an assembly process for the auxiliary electrode of FIG. 7.
FIG. 10 is a perspective view of the auxiliary electrode of FIG. 7 at another stage in an assembly process for the auxiliary electrode of FIG. 7.
FIG. 11 is a perspective view of the auxiliary electrode of FIG. 7 at yet another stage in an assembly process that adds an extension tab to the auxiliary electrode of FIG. 7.
FIG. 12 is a perspective view of the buffer system of FIG. 5 at a stage in an assembly process for the buffer system.
FIG. 13 is a perspective view of the buffer system of FIG. 5 at another stage in an assembly process for the buffer system.
FIG. 14 is a perspective view of the buffer system of FIG. 5 at yet another stage in an assembly process for the buffer system.
FIG. 15 is a cross-sectional view of a portion of the buffer system of FIG. 14.
FIG. 16 is a perspective view of the buffer system of FIG. 5 at yet another stage in an assembly process for the buffer system.
FIG. 17 is a perspective view of the buffer system of FIG. 5 subsequent to performing a buffer process on a secondary battery.
FIG. 18 is a flow chart of a method of buffering a secondary battery with carrier ions using an auxiliary electrode of an exemplary embodiment.
FIG. 19 is a flow chart depicting additional details of the method of FIG. 18.
FIG. 20 is a flow chart depicting additional details of the method of FIG. 18.
FIG. 21 is a flow chart depicting additional details of the method of FIG. 18.

### DEFINITIONS

"A," "an," and "the" (i.e., singular forms) as used herein refer to plural referents unless the context clearly dictates otherwise. For example, in one instance, reference to "an electrode" includes both a single electrode and a plurality of similar electrodes.

"About" and "approximately" as used herein refers to plus or minus 10%, 5%, or 1% of the value stated. For example, in one instance, about 250 micrometers (µm) would include 225 µm to 275 µm. By way of further example, in one instance, about 1,000 µm would include 900 µm to 1,100 µm. Unless otherwise indicated, all numbers expressing quantities (e.g., measurements, and the like) and so forth used in the specification and claims are to be understood as being modified in all instances by the term "about." Accordingly, unless indicated to the contrary, the numerical parameters set forth in the following specification and attached claims are approximations. Each numerical parameter should at least be construed in light of the number of reported significant digits and by applying ordinary rounding techniques.

"Anode" as used herein in the context of a secondary battery refers to the negative electrode in the secondary battery.

"Anode material" or "Anodically active" as used herein means material suitable for use as the negative electrode of a secondary battery
"Cathode" as used herein in the context of a secondary battery refers to the positive electrode in the secondary battery
"Cathode material" or "Cathodically active" as used herein means material suitable for use as the positive electrode of a secondary battery.

"Conversion chemistry active material" or "Conversion chemistry material" refers to a material that undergoes a chemical reaction during the charging and discharging cycles of a secondary battery.

"Counter-electrode" as used herein may refer to the negative or positive electrode (anode or cathode), opposite of the Electrode, of a secondary battery unless the context clearly indicates otherwise.

"Counter-electrode current collector" as used herein may refer to the negative or positive (anode or cathode) current collector, opposite of the Electrode current connector, of a secondary battery unless the context clearly indicates otherwise.

"Cycle" as used herein in the context of cycling of a secondary battery between charged and discharged states refers to charging and/or discharging a battery to move the battery in a cycle from a first state that is either a charged or discharged state, to a second state that is the opposite of the first state (i.e., a charged state if the first state was discharged, or a discharged state if the first state was charged), and then moving the battery back to the first state to complete the cycle. For example, a single cycle of the secondary battery between charged and discharged states can include, as in a charge cycle, charging the battery from a discharged state to a charged state, and then discharging back to the discharged state, to complete the cycle. The single cycle can also include, as in a discharge cycle, discharging the battery from the charged state to the discharged state, and then charging back to a charged state, to complete the cycle.

"Electrochemically active material" as used herein means anodically active or cathodically active material.

"Electrode" as used herein may refer to the negative or positive electrode (anode or cathode) of a secondary battery unless the context clearly indicates otherwise.

"Electrode current collector" as used herein may refer to the negative or positive (anode or cathode) current collector of a secondary battery unless the context clearly indicates otherwise.

"Electrode material" as used herein may refer to anode material or cathode material unless the context clearly indicates otherwise.

"Electrode structure" as used herein may refer to an anode structure (e.g., negative electrode structure) or a cathode structure (e.g., positive electrode structure) adapted for use in a battery unless the context clearly indicates otherwise.

"Capacity" or "C" as used herein refers to an amount of electric charge that a battery (or a sub-portion of a battery comprising one or more pairs of electrode structures and counter-electrode structures that form a bilayer) can deliver at a pre-defined voltage unless the context clearly indicates otherwise.

"Electrolyte" as used herein refers to a non-metallic liquid, gel, or solid material in which current is carried by the movement of ions adapted for use in a battery unless the context clearly indicates otherwise.

"Charged state" as used herein in the context of the state of a secondary battery refers to a state where the secondary battery is charged to at least 75% of its rated capacity unless the context clearly indicates otherwise. For example, the battery may be charged to at least 80% of its rated capacity, at least 90% of its rated capacity, and even at least 95% of its rated capacity, such as 100% of its rated capacity.

"Discharge capacity" as used herein in connection with a negative electrode means the quantity of carrier ions available for extraction from the negative electrode and insertion into the positive electrode during a discharge operation of the battery between a predetermined set of cell end of charge and end of discharge voltage limits unless the context clearly indicates otherwise.

"Discharged state" as used herein in the context of the state of a secondary battery refers to a state where the secondary battery is discharged to less than 25% of its rated capacity unless the context clearly indicates otherwise. For example, the battery may be discharged to less than 20% of its rated capacity, such as less than 10% of its rated capacity, and even less than 5% of its rated capacity, such as 0% of its rated capacity.

"Reversible coulombic capacity" as used herein in connection with an electrode (i.e., a positive electrode, a negative electrode or an auxiliary electrode) means the total capacity of the electrode for carrier ions available for reversible exchange with a counter electrode.

"Longitudinal axis," "transverse axis," and "vertical axis," as used herein refer to mutually perpendicular axes (i.e., each are orthogonal to one another). For example, the "longitudinal axis," "transverse axis," and the "vertical axis" as used herein are akin to a Cartesian coordinate system used to define three-dimensional aspects or orientations. As such, the descriptions of elements of the disclosed subject matter herein are not limited to the particular axis or axes used to describe three-dimensional orientations of the elements. Alternatively stated, the axes may be interchangeable when referring to three-dimensional aspects of the disclosed subject matter.

"Composite material" or "Composite" as used herein refers to a material which comprises two or more constituent materials unless the context clearly indicates otherwise.

"Void fraction" or "Porosity" or "Void volume fraction" as used herein refers to a measurement of the voids (i.e., empty) spaces in a material, and is a fraction of the volume of voids over the total volume of the material, between 0 and 1, or as a percentage between 0% and 100%.

"Polymer" as used herein may refer to a substance or material consisting of repeating subunits of macromolecules unless the context clearly indicates otherwise.

"Microstructure" as used herein may refer to the structure of a surface of a material revealed by an optical microscope above about 25x magnification unless the context clearly indicates otherwise.

"Microporous" as used herein may refer to a material containing pores with diameters less than about 2 nanometers unless the context clearly indicates otherwise.

"Macroporous" as used herein may refer to a material containing pores with diameters greater than about 50 nanometers unless the context clearly indicates otherwise.

"Nanoscale" or "Nanoscopic scale" as used herein may refer to structures with a length scale in the range of about 1 nanometer to about 100 nanometers.

### DETAILED DESCRIPTION

Embodiments of the present disclosure may provide benefits such as mitigation or improvement of the poor ICE associated with silicon-based anodes in secondary batteries utilizing an auxiliary anode electrochemically coupled with the secondary battery that provides additional carrier ions during and/or subsequent to initial battery formation. The use of an auxiliary anode mitigates the initial loss of carrier ions in the secondary battery during initial formation, thereby providing a technical benefit of, for example, increasing the capacity of the secondary battery after formation. Further, the introduction of additional carrier ions after battery formation mitigates the cycle-based decrease in carrier ions that are typically lost through secondary reactions, thereby providing a technical benefit of decreasing the cycle-by-cycle capacity loss in a secondary battery. Further still, the introduction of additional carrier ions after battery formation improves the cycling performance of the secondary battery by maintaining the anode of the secondary battery at a lower potential voltage at discharge, as the anode includes additional carrier ions. In some embodiments, the auxiliary anode is removed from the secondary battery after formation, thereby providing a technical benefit of increasing the energy density of the battery.

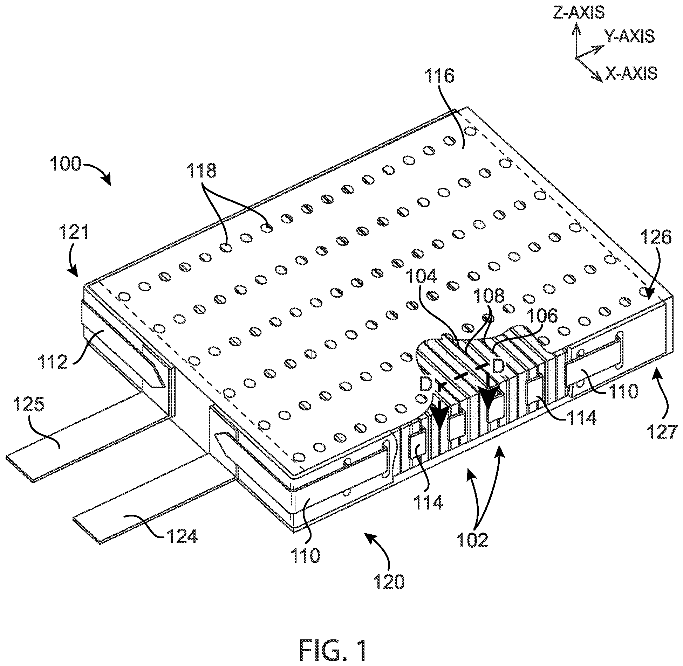

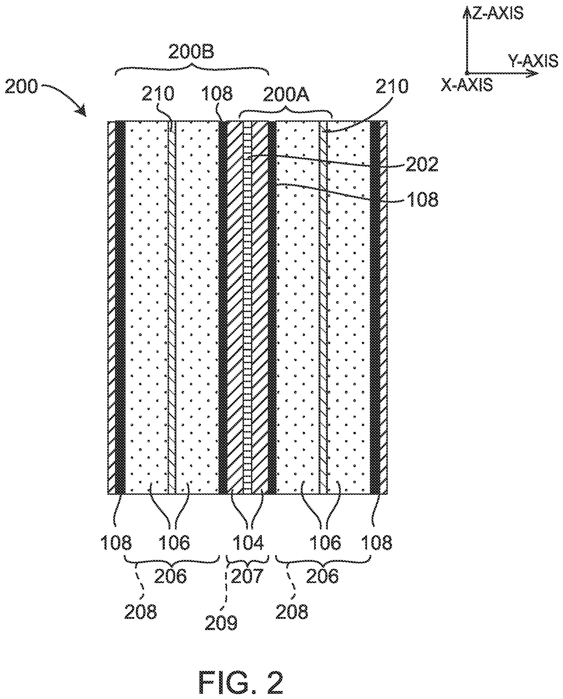

FIG. 1 is a perspective view of a secondary battery 100 of an exemplary embodiment, and FIG. 2 depicts a unit cell 200 for the secondary battery 100. The secondary battery 100 in FIG. 1 has a portion exposed showing some of the internal structures of the secondary battery, as further described below.

As illustrated in FIG. 1, the secondary battery 100 includes a plurality of adjacent electrode sub-units 102. Each electrode sub-unit 102 has a dimension in the X-axis, Y-axis and Z-axis, respectively. The X-axis, Y-axis and Z-axis are each mutually perpendicular, akin to a Cartesian coordinate system. As used herein, dimensions of each electrode sub-unit 102 in the Z-axis may be referred to as a "height", dimensions in the X-axis may be referred to as a "length" and dimensions in the Y-axis may be referred to as a "width." The electrode sub-units 102 may be combined into one or more unit cells 200 (see FIG. 2). Each of the unit cells 200 comprises at least one anodically active material layer 104 and at least one cathodically active material layer 106. The anodically active material layer 104 and the cathodically active material layer 106 are electrically isolated from each other by a separator layer 108. It should be appreciated that in suitable embodiments of the present disclosure, any number of the electrode sub-units 102 may be used, such as from 1 to 200 or more of the electrode sub-units 102 in the secondary battery 100.

Referring to FIG. 1, the secondary battery 100 includes a first busbar 110 and a second busbar 112 that are in electrical contact with the anodically active material layer 104 and the cathodically active material layer 106 of each of the electrode sub-units 102, respectively, via electrode tabs 114. The electrode tabs 114 are only visible on a first side 120 of the secondary battery 100 in FIG. 1, although a different set of the electrode tabs 114 are present on a second side 121 of the secondary battery. The electrode tabs 114 on the first side 120 of the secondary battery 100 are electrically coupled with the first busbar 110, which may be referred to as an anode busbar. The electrode tabs 114 on the second side 121 of the secondary battery 100 (not visible in FIG. 1) are electrically coupled to the second busbar 112, which may be referred to as a cathode busbar. In this embodiment, the first busbar 110 is electrically coupled with a first electrical terminal 124 of the secondary battery 100, which is electrically conductive. When the first busbar 110 comprises an anode busbar for the secondary battery 100, the first electrical terminal 124 comprises a negative terminal for the secondary battery 100. Further in this embodiment, the second busbar 112 is electrically coupled with a second electrical terminal 125 of the secondary battery 100, which is electrically conductive. When the second busbar 112 comprises a cathode busbar for the secondary battery 100, the second electrical terminal 125 comprises a positive terminal for the secondary battery 100.

In one embodiment, a casing 116, which may be referred to as a constraint, may be applied over one or both of the X-Y surfaces of the secondary battery 100. In the embodiment shown in FIG. 1, the casing 116 includes a plurality of perforations 118 to facilitate distribution or flow of an electrolyte solution once the secondary battery 100 has been fully assembled. In one embodiment, the casing 116 comprises stainless steel, such as SS301, SS316, 440C or 440C hard. In other embodiments, the casing 116 comprises aluminum (e.g., aluminum 7075-T6, hard H18, etc.), titanium (e.g., 6Al-4V), beryllium, beryllium copper (hard), copper (O₂ free, hard), nickel, other metals or metal alloys, composite, polymer, ceramic (e.g., alumina (e.g., sintered or Coorstek AD96), zirconia (e.g., Coorstek YZTP), yttriastabilizedzirconia (e.g., ENrG E-Strate^{®})), glass, tempered glass, polyetheretherketone (PEEK) (e.g., Aptiv 1102), PEEK with carbon (e.g., Victrex 90HMF40 or Xycomp 1000-04), polyphenylene sulfide (PPS) with carbon (e.g., Tepex Dynalite 207), polyetheretherketone (PEEK) with 30% glass (e.g., Victrex 90HMF40 or Xycomp 1000-04), polyimide (e.g., Kapton^{®}), E Glass Std Fabric/Epoxy, 0 deg, E Glass UD/Epoxy, 0 deg, Kevlar Std Fabric/Epoxy, 0 deg, Kevlar UD/Epoxy, 0 deg, Carbon Std Fabric/Epoxy, 0 deg, Carbon UD/Epoxy, 0 deg, Toyobo Zylon^{®} HM Fiber/Epoxy, Kevlar 49 Aramid Fiber, S Glass Fibers, Carbon Fibers, Vectran UM LCP Fibers, Dyneema, Zylon, or other suitable material.

In some embodiments, the casing 116 comprises a sheet having a thickness in the range of about 10 to about 100 micrometers (µm). In one embodiment, the casing 116 comprises a stainless-steel sheet (e.g., SS316) having a thickness of about 30 µm. In another embodiment, the casing 116 comprises an aluminum sheet (e.g., 7075-T6) having a thickness of about 40 µm. In another embodiment, the casing 116 comprises a zirconia sheet (e.g., Coorstek YZTP) having a thickness of about 30 µm. In another embodiment, the casing 116 comprises an E Glass UD/Epoxy 0 deg sheet having a thickness of about 75 µm. In another embodiment, the casing 116 comprises 12 µm carbon fibers at >50% packing density.

In this embodiment, the secondary battery 100 includes a first major surface 126 and a second major surface 127 that opposes the first major surface 126. The major surfaces 126, 127 of the secondary battery 100 may be substantially planar is some embodiments.

With reference to FIG. 2, which depicts the secondary battery 100 along cut lines D-D in FIG. 1, the individual layers of the unit cell 200, which may be the same as or similar to the electrode sub-units 102, is shown. For each of the unit cells 200, in some embodiments, the separator layer 108 is an ionically permeable microporous polymeric material suitable for use as a separator in a secondary battery. In an embodiment, the separator layer 108 is coated with ceramic particles on one or both sides. In this embodiment, unit cell 200 includes an anode current collector 202 in the center, which may comprise or be electrically coupled with, one of the electrode tabs 114 on one of the sides 120, 121 of the secondary battery 100 (see FIG. 1). The unit cell 200 further includes the anodically active material layer 104, the separator layer 108, the cathodically active material layer 106, and a cathode current collector 204 in a stacked formation. The cathode current collector 204 may comprise or be electrically coupled with, one of the electrode tabs 114 on one of the sides 120, 121 of the secondary battery 100 that is different than the anode current collector 202.

In an alternative embodiment, the placement of the cathodically active material layer 106 and the anodically active material layer 104 may be swapped, such that the cathodically active material layers are toward the center and the anodically active material layers are distal to the cathodically active material layers. In one embodiment, a unit cell 200A includes, from left to right in stacked succession, the anode current collector 202, the anodically active material layer 104, the separator layer 108, the cathodically active material layer 106, and the cathode current collector 204. In an alternative embodiment, a unit cell 200B includes, from left to right in stacked succession, the separator layer 108, a first layer of the cathodically active material layer 106, the cathode current collector 204, a second layer of the cathodically active material layer 106, the separator layer 108, a first layer of the anodically active material layer 104, the anode current collector 202, a second layer of the anodically active material layer 104, and the separator layer 108.

In FIG. 2, the layered structure comprising the cathodically active material layer 106 and the cathode current collector 204 may be referred to as a cathode structure 206, while the layered structure comprising the anodically active material layer 104 and the anode current collector 202 may be referred to as an anode structure 207. Collectively, the population of the cathode structures 206 for the secondary battery 100 may be referred to as a positive electrode 208 of the secondary battery 100, and the population of the anode structures 207 for the secondary battery 100 (only one of the anode structures 207 are shown in FIG. 2) may be referred to as the negative electrode 209 of the secondary battery 100.

A voltage difference V exists between adjacent cathode structures 206 and anode structures 207, with the adjacent structures considered a bilayer in some embodiments. Each bilayer has a capacity C determined by the makeup and configuration of the cathode structures 206 and the anode structures 207. In this embodiment, each bilayer produces a voltage difference of about 4.35 volts. In other embodiments, each bilayer has a voltage difference of about 0.5 volts, about 1.0 volts, about 1.5 volts, about 2.0 volts, about 2.5 volts, about 3.0 volts, about 3.5 volts, about 4.0 volts, 4.5 volts, about 5.0 volts, between 4 and 5 volts, or any other suitable voltage. During cycling between a charged state and a discharged state, the voltage may vary, for example, between about 2.5 volts and about 4.35 volts. The capacity C of a bilayer in this embodiment is about 3.5 milliampere-hour (mAh). In other embodiments, the capacity C of a bilayer is about 2 mAh, less than 5 mAh, or any other suitable capacity. In some embodiments, the capacity C of a bilayer may be up to about 10 mAh.

The cathode current collector 204 may comprise aluminum, nickel, cobalt, titanium, and tungsten, or alloys thereof, or any other material suitable for use as a cathode current collector layer. In general, the cathode current collector 204 will have an electrical conductivity of at least about 10³ Siemens/cm. For example, in one such embodiment, the cathode current collector 204 will have a conductivity of at least about 10⁴ Siemens/cm. By way of further example, in one such embodiment, the cathode current collector 204 will have a conductivity of at least about 10⁵ Siemens/cm. In general, the cathode current collector 204, may comprise a metal such as aluminum, carbon, chromium, gold, nickel, NiP, palladium, platinum, rhodium, ruthenium, an alloy of silicon and nickel, titanium, or a combination thereof (see "Current collectors for positive electrodes of lithium-based batteries" by A. H. Whitehead and M. Schreiber, Journal of the Electrochemical Society, 152(11) A2105-A2113 (2005)). By way of further example, in one embodiment, the cathode current collector 204 comprises gold or an alloy thereof such as gold silicide. By way of further example, in one embodiment, the cathode current collector 204 comprise nickel or an alloy thereof such as nickel silicide.

The cathodically active material layer 106 may be an intercalation-type chemistry active material, a conversion chemistry active material, or a combination thereof.

Exemplary conversion chemistry materials useful in the present disclosure include, but are not limited to, S (or Li₂S in the lithiated state), LiF, Fe, Cu, Ni, FeF₂, FeOaF_{3.2d}, FeF₃, CoF₃, CoF₂, CuF₂, NiF₂, where 0 ≤ d ≤ 0.5, and the like.

Exemplary cathodically active material layers 106 also include any of a wide range of intercalation-type cathodically active materials. For example, for a lithium-ion battery, the cathodically active material may comprise a cathodically active material selected from transition metal oxides, transition metal sulfides, transition metal nitrides, lithium-transition metal oxides, lithium-transition metal sulfides, and lithium-transition metal nitrides may be selectively used. The transition metal elements of these transition metal oxides, transition metal sulfides, and transition metal nitrides can include metal elements having a d-shell or f-shell. Specific examples of such metal element are Sc, Y, lanthanoids, actinoids, Ti, Zr, Hf, V, Nb, Ta, Cr, Mo, W, Mn, Tc, Re, Fe, Ru, Os, Co, Rh, Ir, Ni, Pb, Pt, Cu, Ag, and Au. Additional cathodically active materials include LiCoO₂, LiNi_{0.5}Mn_{1.5}O₄, Li(NiₓCo_{y}Al_{z})O₂, LiFePO₄, Li₂MnO₄, V₂O₅, molybdenum oxysulfides, phosphates, silicates, vanadates, sulfur, sulfur compounds, oxygen (air), Li(NiₓMn_{y}Co_{z})O₂, and combinations thereof.

In general, the cathodically active material layers 106 will have a thickness of at least about 20 µm. For example, in one embodiment, the cathodically active material layers 106 will have a thickness of at least about 40 µm. By way of further example, in one such embodiment, the cathodically active material layers 106 will have a thickness of at least about 60 µm. By way of further example, in one such embodiment, the cathodically active material layers 106 will have a thickness of at least about 100 µm. Typically, the cathodically active material layers 106 will have a thickness of less than about 90 µm or less than about 70 µm.

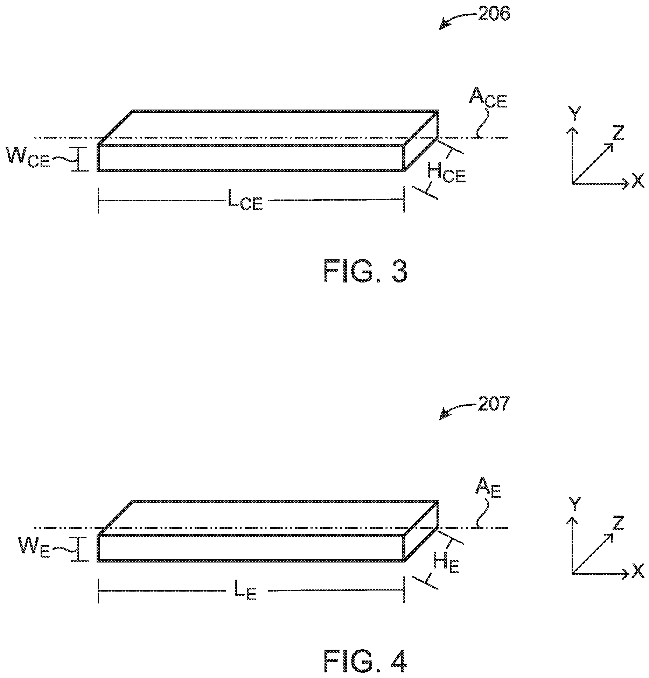

FIG. 3 depicts one of the cathode structures 206 of FIG. 2. Each cathode structure 206 has a length (L_{CE}) measured along the longitudinal axis (A_{CE}), a width (W_{CE}), and a height (H_{CE}) measured in a direction that is perpendicular to each of the directions of measurement of the length L_{CE} and the width W_{CE}.

The length L_{CE} of the cathode structures 206 will vary depending upon the secondary battery 100 and its intended use. In general, however, each cathode structure 206 will typically have a length L_{CE} in the range of about 5 millimeters (mm) to about 500 mm. For example, in one such embodiment, each cathode structure 206 has a length L_{CE} of about 10 mm to about 250 mm. By way of further example, in one such embodiment each cathode structure 206 has a length L_{CE} of about 25 mm to about 100 mm. According to one embodiment, the cathode structures 206 include one or more first electrode members having a first length, and one or more second electrode members having a second length that is different than the first length. In yet another embodiment, the different lengths for the one or more first electrode members and one or more second electrode members may be selected to accommodate a predetermined shape for an electrode assembly, such as an electrode assembly shape having a different lengths along one or more of the longitudinal and/or transverse axis, and/or to provide predetermined performance characteristics for the secondary battery 100.

The width W_{CE} of the cathode structures 206 will also vary depending upon the secondary battery 100 and its intended use. In general, however, the cathode structures 206 will typically have a width W_{CE} within the range of about 0.01 mm to 2.5 mm. For example, in one embodiment, the width W_{CE} of each cathode structure 206 will be in the range of about 0.025 mm to about 2 mm. By way of further example, in one embodiment, the width W_{CE} of each cathode structure 206 will be in the range of about 0.05 mm to about 1 mm. According to one embodiment, the cathode structures 206 include one or more first electrode members having a first width, and one or more second electrode members having a second width that is different than the first width. In yet another embodiment, the different widths for the one or more first electrode members and one or more second electrode members may be selected to accommodate a predetermined shape for the secondary battery 100, such as an assembly having a different widths along one or more of the longitudinal and/or transverse axis, and/or to provide predetermined performance characteristics for the secondary battery 100.

The height H_{CE} of the cathode structures 206 will also vary depending upon the secondary battery 100 and its intended use. In general, however, the cathode structures 206 will typically have a height H_{CE} within the range of about 0.05 mm to about 25 mm. For example, in one embodiment, the height H_{CE} of each cathode structure 206 will be in the range of about 0.05 mm to about 5 mm. By way of further example, in one embodiment, the height H_{CE} of each cathode structure 206 will be in the range of about 0.1 mm to about 1 mm. According to one embodiment, the cathode structures 206 include one or more first cathode members having a first height, and one or more second cathode members having a second height that is different than the first height. In yet another embodiment, the different heights for the one or more first cathode members and one or more second cathode members may be selected to accommodate a predetermined shape for the secondary battery 100, such as a shape having a different heights along one or more of the longitudinal and/or transverse axis, and/or to provide predetermined performance characteristics for the secondary battery 100.

In general, each cathode structure 206 has a length L_{CE} that is substantially greater than its width W_{CE} and substantially greater than its height H_{CE}. For example, in one embodiment, the ratio of L_{CE} to each of W_{CE} and H_{CE} is at least 5:1, respectively (that is, the ratio of L_{CE} to W_{CE} is at least 5:1, respectively and the ratio of L_{CE} to H_{CE} is at least 5:1, respectively), for each cathode structure 206. By way of further example, in one embodiment the ratio of L_{CE} to each of W_{CE} and H_{CE} is at least 10:1 for each cathode structure 206. By way of further example, in one embodiment, the ratio of L_{CE} to each of W_{CE} and H_{CE} is at least 15:1 for each cathode structure 206. By way of further example, in one embodiment, the ratio of L_{CE} to each of W_{CE} and H_{CE} is at least 20:1 for each cathode structure 206.

In one embodiment, the ratio of the height H_{CE} to the width W_{CE} of the cathode structures 206 is at least 0.4:1, respectively. For example, in one embodiment, the ratio of H_{CE} to W_{CE} will be at least 2:1, respectively, for each cathode structure 206. By way of further example, in one embodiment, the ratio of H_{CE} to W_{CE} will be at least 10:1, respectively, for each cathode structure 206. By way of further example, in one embodiment, the ratio of H_{CE} to W_{CE} will be at least 20:1, respectively, for each cathode structure 206. Typically, however, the ratio of H_{CE} to W_{CE} will generally be less than 1,000: 1, respectively, for each cathode structure 206. For example, in one embodiment, the ratio of H_{CE} to W_{CE} will be less than 500: 1, respectively, for each cathode structure 206. By way of further example, in one embodiment, the ratio of H_{CE} to W_{CE} will be less than 100: 1, respectively. By way of further example, in one embodiment, the ratio of H_{CE} to W_{CE} will be less than 10:1, respectively. By way of further example, in one embodiment, the ratio of H_{CE} to W _{CE} will be in the range of about 2:1 to about 100: 1, respectively, for each cathode structure 206.

### ANODIC TYPE STRUCTURES AND MATERIALS

Referring again to FIG. 2, the anode current collector 202 in the unit cell 200 may comprise a conductive material such as copper, carbon, nickel, stainless-steel, cobalt, titanium, and tungsten, and alloys thereof, or any other material suitable as an anode current collector layer. In general, the anode current collector 202 will have an electrical conductivity of at least about 10³ Siemens/cm. For example, in one such embodiment, the anode current collector 202 will have a conductivity of at least about 10⁴ Siemens/cm. By way of further example, in one such embodiment, the anode current collector 202 will have a conductivity of at least about 10⁵ Siemens/cm.

In general, the anodically active material layers 104 in the unit cell 200 may be selected from the group consisting of: (a) silicon (Si), germanium (Ge), tin (Sn), lead (Pb), antimony (Sb), bismuth (Bi), zinc (Zn), aluminum (Al), titanium (Ti), nickel (Ni), cobalt (Co), and cadmium (Cd); (b) alloys or intermetallic compounds of Si, Ge, Sn, Pb, Sb, Bi, Zn, Al, Ti, Ni, Co, or Cd with other elements; (c) oxides, carbides, nitrides, sulfides, phosphides, selenides, and tellurides of Si, Ge, Sn, Pb, Sb, Bi, Zn, Al, Ti, Fe, Ni, Co, V, or Cd, and their mixtures, composites, or lithium-containing composites; (d) salts and hydroxides of Sn; (e) lithium titanate, lithium manganate, lithium aluminate, lithium-containing titanium oxide, lithium transition metal oxide, ZnCo2O4; (f) particles of graphite and carbon; (g) lithium metal; and (h) combinations thereof.

Exemplary anodically active material layers 104 include carbon materials such as graphite and soft or hard carbons, or graphene (e.g., single-walled or multi-walled carbon nanotubes), or any of a range of metals, semi-metals, alloys, oxides, nitrides and compounds capable of intercalating lithium or forming an alloy with lithium. Specific examples of the metals or semi-metals capable of constituting the anode material include graphite, tin, lead, magnesium, aluminum, boron, gallium, silicon, Si/C composites, Si/graphite blends, silicon oxide (SiOx), porous Si, intermetallic Si alloys, indium, zirconium, germanium, bismuth, cadmium, antimony, silver, zinc, arsenic, hafnium, yttrium, lithium, sodium, graphite, carbon, lithium titanate, palladium, and mixtures thereof. In one exemplary embodiment, the anodically active material comprises aluminum, tin, or silicon, or an oxide thereof, a nitride thereof, a fluoride thereof, or other alloy thereof. In another exemplary embodiment, the anodically active material layers 104 comprise silicon or an alloy or oxide thereof.

In one embodiment, the anodically active material layers 104 are microstructured to provide a significant void volume fraction to accommodate volume expansion and contraction as lithium ions (or other carrier ions) are incorporated into or leave the anodically active material layers 104 during charging and discharging processes for the secondary battery 100. In general, the void volume fraction of (each of) the anodically active material layer 104 is at least 0.1. Typically, however, the void volume fraction of (each of) the anodically active material layer 104 is not greater than 0.8. For example, in one embodiment, the void volume fraction of (each of) the anodically active material layer 104 is about 0.15 to about 0.75. By way of the further example, in one embodiment, the void volume fraction of (each of) the anodically active material layer 104 is about 0.2 to about 0.7. By way of the further example, in one embodiment, the void volume fraction of (each of) the anodically active material layer 104 is about 0.25 to about 0.6.

Depending upon the composition of the microstructured anodically active material layers 104 and the method of their formation, the microstructured anodically active material layers 104 may comprise macroporous, microporous, or mesoporous material layers or a combination thereof, such as a combination of microporous and mesoporous, or a combination of mesoporous and macroporous. Microporous material is typically characterized by a pore dimension of less than 10 nanometer (nm), a wall dimension of less than 10 nm, a pore depth of 1 µm to 50 µm, and a pore morphology that is generally characterized by a "spongy" and irregular appearance, walls that are not smooth, and branched pores. Mesoporous material is typically characterized by a pore dimension of 10 nm to 50 nm, a wall dimension of 10 nm to 50 nm, a pore depth of 1 µm to 100 µm, and a pore morphology that is generally characterized by branched pores that are somewhat well defined or dendritic pores. Macroporous material is typically characterized by a pore dimension of greater than 50 nm, a wall dimension of greater than 50 nm, a pore depth of 1 µm to 500 µm, and a pore morphology that may be varied, straight, branched, or dendritic, and smooth or rough-walled. Additionally, the void volume may comprise open or closed voids, or a combination thereof. In one embodiment, the void volume comprises open voids, that is, the anodically active material layers 104 contain voids having openings at the lateral surface of the anodically active material layers through which lithium ions (or other carrier ions) can enter or leave. For example, lithium ions may enter the anodically active material layers 104 through the void openings after leaving the cathodically active material layers 106. In another embodiment, the void volume comprises closed voids, that is, the anodically active material layers 104 contain voids that are enclosed. In general, open voids can provide greater interfacial surface area for the carrier ions whereas closed voids tend to be less susceptible to SEI formation, while each provides room for the expansion of anodically active material layers 104 upon the entry of carrier ions. In certain embodiments, therefore, it is preferred that the anodically active material layers 104 comprise a combination of open and closed voids.

In one embodiment, the anodically active material layers 104 comprise porous aluminum, tin or silicon or an alloy, an oxide, or a nitride thereof. Porous silicon layers may be formed, for example, by anodization, by etching (e.g., by depositing precious metals such as gold, platinum, silver or gold/palladium on the surface of single crystal silicon and etching the surface with a mixture of hydrofluoric acid and hydrogen peroxide), or by other methods known in the art such as patterned chemical etching. Additionally, the porous anodically active material layers 104 will generally have a porosity fraction of at least about 0.1, but less than 0.8 and have a thickness of about 1 µm to about 100 µm. For example, in one embodiment, the anodically active material layers 104 comprise porous silicon, have a thickness of about 5 µm to about 100 µm, and have a porosity fraction of about 0.15 to about 0.75. By way of further example, in one embodiment, the anodically active material layers 104 comprise porous silicon, have a thickness of about 10 µm to about 80 µm, and have a porosity fraction of about 0.15 to about 0.7. By way of further example, in one such embodiment, the anodically active material layers 104 comprise porous silicon, have a thickness of about 20 µm to about 50 µm, and have a porosity fraction of about 0.25 to about 0.6. By way of further example, in one embodiment, the anodically active material layers 104 comprise a porous silicon alloy (such as nickel silicide), have a thickness of about 5 µm to about 100 µm, and have a porosity fraction of about 0.15 to about 0.75.

**In** another embodiment, the anodically active material layers 104 comprise fibers of aluminum, tin, or silicon, or an alloy thereof. Individual fibers may have a diameter (thickness dimension) of about 5 nm to about 10,000 nm and a length generally corresponding to the thickness of the anodically active material layers 104. Fibers (nanowires) of silicon may be formed, for example, by chemical vapor deposition or other techniques known in the art such as vapor liquid solid (VLS) growth and solid liquid solid (SLS) growth. Additionally, the anodically active material layers 104 will generally have a porosity fraction of at least about 0.1, but less than 0.8 and have a thickness of about 1 µm to about 200 µm. For example, in one embodiment, the anodically active material layers 104 comprise silicon nanowires, have a thickness of about 5 µm to about 100 µm, and a porosity fraction of about 0.15 to about 0.75. By way of further example, in one embodiment, the anodically active material layers 104 comprise silicon nanowires, have a thickness of about 10 µm to about 80 µm, and a porosity fraction of about 0.15 to about 0.7. By way of further example, in one such embodiment, the anodically active material layers 104 comprise silicon nanowires, have a thickness of about 20 µm to about 50 µm, and a porosity fraction of about 0.25 to about 0.6. By way of further example, in one embodiment, the anodically active material layers 104 comprise nanowires of a silicon alloy (such as nickel silicide), have a thickness of about 5 µm to about 100 µm, and a porosity fraction of about 0.15 to about 0.75.

**In** yet other embodiments, the anodically active material layers 104 are coated with a particulate lithium material selected from the group consisting of stabilized lithium metal particles, e.g., lithium carbonate-stabilized lithium metal powder, lithium silicate stabilized lithium metal powder, or other source of stabilized lithium metal powder or ink. The particulate lithium material may be applied on the anodically active material layers 104 by spraying, loading, or otherwise disposing the lithium particulate material onto the anodically active material layers 104 at a loading amount of about 0.05 mg/cm² to 5 mg/cm², e.g., about 0.1 mg/cm² to 4 mg/cm², or even about 0.5 mg/cm² to 3 mg/cm². The average particle size (D₅₀) of the lithium particulate material may be 5 µm to 200 µm, e.g., about 10 µm to 100 µm, 20 µm to 80 µm, or even about 30 µm to 50 µm. The average particle size (D₅₀) may be defined as a particle size corresponding to 50% in a cumulative volume-based particle size distribution curve. The average particle size (D₅₀) may be measured, for example, using a laser diffraction method.

**In** one embodiment, the anode current collector 202, has an electrical conductance that is substantially greater than the electrical conductance of its associated anodically active material layers 104. For example, in one embodiment, the ratio of the electrical conductance of the anode current collector 202 to the electrical conductance of the anodically active material layers 104 is at least 100:1 when there is an applied current to store energy in the secondary battery 100 or an applied load to discharge the secondary battery 100. By way of further example, in some embodiments, the ratio of the electrical conductance of the anode current collector 202 to the electrical conductance of the anodically active material layers 104 is at least 500:1 when there is an applied current to store energy in the secondary battery 100 or an applied load to discharge the secondary battery 100. By way of further example, in some embodiments, the ratio of the electrical conductance of the anode current collector 202 to the electrical conductance of the anodically active material layers 104 is at least 1000:1 when there is an applied current to store energy in the secondary battery 100 or an applied load to discharge the secondary battery 100. By way of further example, in some embodiments, the ratio of the electrical conductance of the anode current collector 202 to the electrical conductance of the anodically active material layers 104 is at least 5000:1 when there is an applied current to store energy in the secondary battery 100 or an applied load to discharge the secondary battery 100. By way of further example, in some embodiments, the ratio of the electrical conductance of the anode current collector 202 to the electrical conductance of the anodically active material layers 104 is at least 10,000:1 when there is an applied current to store energy in the secondary battery 100 or an applied load to discharge the secondary battery 100.

FIG. 4 depicts one of the anode structures 207 of FIG. 2 of an exemplary embodiment. Each anode structure 207 has a length (L_{E}) measured along a longitudinal axis (A_{E}) of the electrode, a width (W_{E}), and a height (H_{E}) measured in a direction that is orthogonal to each of the directions of measurement of the length L_{E} and the width W_{E}.

The length L_{E} of the anode structures 207 will vary depending upon the secondary battery 100 and its intended use. In general, however, the anode structures 207 will typically have a length L_{E} in the range of about 5 millimeter (mm) to about 500 mm. For example, in one such embodiment, the anode structures 207 have a length L_{E} of about 10 mm to about 250 mm. By way of further example, in one such embodiment, the anode structures 207 have a length L_{E} of about 25 mm to about 100 mm. According to one embodiment, the anode structure 207 include one or more first electrode members having a first length, and one or more second electrode members having a second length that is different than the first length. In yet another embodiment, the different lengths for the one or more first electrode members and the one or more second electrode members may be selected to accommodate a predetermined shape for the secondary battery 100, such as a shape having a different lengths along one or more of the longitudinal and/or transverse axis, and/or to provide predetermined performance characteristics for the secondary battery 100.

The width W_{E} of the anode structures 207 will also vary depending upon the secondary battery 100 and its intended use. In general, however, each anode structure 207 will typically have a width W_{E} within the range of about 0.01 mm to 2.5 mm. For example, in one embodiment, the width W_{E} of each anode structure 207 will be in the range of about 0.025 mm to about 2 mm. By way of further example, in one embodiment, the width W_{E} of each anode structure 207 will be in the range of about 0.05 mm to about 1 mm. According to one embodiment, the anode structures 207 include one or more first electrode members having a first width, and one or more second electrode members having a second width that is different than the first width. In yet another embodiment, the different widths for the one or more first electrode members and one or more second electrode members may be selected to accommodate a predetermined shape for the secondary battery 100, such as a shape having a different widths along one or more of the longitudinal and/or transverse axis, and/or to provide predetermined performance characteristics for the secondary battery 100.

The height H_{E} of the anode structures 207 will also vary depending upon the secondary battery 100 and its intended use. **In** general, however, the anode structures 207 will typically have a height H_{E} within the range of about 0.05 mm to about 25 mm. For example, in one embodiment, the height H_{E} of each anode structure 207 will be in the range of about 0.05 mm to about 5 mm. By way of further example, in one embodiment, the height H_{E} of each anode structure 207 will be in the range of about 0.1 mm to about 1 mm. According to one embodiment, the anode structures 207 include one or more first electrode members having a first height, and one or more second electrode members having a second height that is different than the first height. **In** yet another embodiment, the different heights for the one or more first electrode members and one or more second electrode members may be selected to accommodate a predetermined shape for the secondary battery 100, such as a shape having a different heights along one or more of the longitudinal and/or transverse axis, and/or to provide predetermined performance characteristics for the secondary battery 100.

**In** general, the anode structures 207 each have a length L_{E} that is substantially greater than each of its width W_{E} and its height H_{E}. For example, in one embodiment, the ratio of L_{E} to each of W_{E} and H_{E} is at least 5:1, respectively (that is, the ratio of L_{E} to W_{E} is at least 5:1, respectively and the ratio of L_{E} to H_{E} is at least 5:1, respectively), for each anode structure 207. By way of further example, in one embodiment, the ratio of L_{E} to each of W_{E} and H_{E} is at least 10:1. By way of further example, in one embodiment, the ratio of L_{E} to each of W_{E} and H_{E} is at least 15:1. By way of further example, in one embodiment, the ratio of L_{E} to each of W_{E} and H_{E} is at least **20:1,** for each anode structure 207.

**In** one embodiment, the ratio of the height H_{E} to the width W_{E} of the anode structures 207 is at least 0.4:1, respectively. For example, in one embodiment, the ratio of H_{E} to W_{E} will be at least **2:1,** respectively, for each anode structure 207. By way of further example, in one embodiment, the ratio of H_{E} to W_{E} will be at least 10:1, respectively. By way of further example, in one embodiment, the ratio of H_{E} to W_{E} will be at least **20:1,** respectively. Typically, however, the ratio of H_{E} to W_{E} will generally be less than 1,000: 1, respectively. For example, in one embodiment, the ratio of H_{E} to W_{E} will be less than 500: 1, respectively. By way of further example, in one embodiment, the ratio of H_{E} to W_{E} will be less than 100: 1, respectively. By way of further example, in one embodiment, the ratio of H_{E} to W_{E} will be less than 10:1, respectively. By way of further example, in one embodiment, the ratio of H_{E} to W_{E} will be in the range of about 2:1 to about 100: 1, respectively, for each anode structure 207.

### SEPARATOR STRUCTURES, SEPARATOR MATERIALS, AND ELECTROLYTES

Referring again to FIG. 2, the separator layer(s) 108 separate the cathode structures 206 from the anode structures 207. The separator layers 108 are made of electrically insulating but ionically permeable separator material. The separator layers 108 are adapted to electrically isolate each member of the plurality of the cathode structures 206 from each member of the plurality of the anode structures 207. Each separator layer 108 will typically include a microporous separator material that can be permeated with a non-aqueous electrolyte; for example, in one embodiment, the microporous separator material includes pores having a diameter of at least 50 Angstroms (Å), more typically in the range of about 2,500 Å, and a porosity in the range of about 25% to about 75%, more typically in the range of about 35% to 55%

In general, the separator layers 108 will each have a thickness of at least about 4 µm. For example, in one embodiment, the separator layers 108 will have a thickness of at least about 8 µm. By way of further example, in one such embodiment, the separator layers 108 will have a thickness of at least about 12 µm. By way of further example, in one such embodiment, the separator layers 108 will have a thickness of at least about 15 µm. In some embodiments, the separator layers 108 will have a thickness of up to 25 µm, up to 50 µm, or any other suitable thickness. Typically, however, the separator layers 108 will have a thickness of less than about 12 µm or less than about 10 µm.

In general, the material of the separator layers 108 may be selected from a wide range of material having the capacity to conduct carrier ions between the anodically active material layers 104 and the cathodically active material layers 106 of the unit cell 200. For example, the separator layers 108 may comprise a microporous separator material that may be permeated with a liquid, non-aqueous electrolyte. Alternatively, the separator layers 108 may comprise a gel or solid electrolyte capable of conducting carrier ions between the anodically active material layers 104 and the cathodically active material layers 106 of the unit cell 200.

In one embodiment, the separator layers 108 may comprise a polymer-based electrolyte. Exemplary polymer electrolytes include PEO-based polymer electrolytes, polymer-ceramic composite electrolytes, polymer-ceramic composite electrolytes, and polymer-ceramic composite electrolyte.

In another embodiment, the separator layers 108 may comprise an oxide-based electrolyte. Exemplary oxide-based electrolytes include lithium lanthanum titanate (Li_{0.34}La_{0.56}TiO₃), Al-doped lithium lanthanum zirconate (Li_{6.24}La₃Zr₂Alo.₂₄O_{11.98}), Ta-doped lithium lanthanum zirconate (Li_{6.4}La₃Zr_{1.4}Tao.₆O₁₂), and lithium aluminum titanium phosphate (Li_{1.4}Al_{0.4}Ti_{1.6}(PO₄)₃).

In another embodiment, the separator layers 108 may comprise a solid electrolyte. Exemplary solid electrolytes include sulfide-based electrolytes such as lithium tin phosphorus sulfide (Li₁₀SnP₂S₁₂), lithium phosphorus sulfide (β-Li₃PS₄), and lithium phosphorus sulfur chloride iodide (Li₆PS₅Cl_{0.9}I_{0.1}).

In some embodiments, the separator layers 108 may comprise a solid-state lithium ion conducting ceramic, such as a lithium-stuffed garnet.

In one embodiment, the separator layers 108 comprise a microporous separator material comprising a particulate material and a binder, with the microporous separator material having a porosity (void fraction) of at least about 20 vol. %. The pores of the microporous separator material will have a diameter of at least 50 Å and will typically fall within the range of about 250 Å to about 2,500 Å. The microporous separator material will typically have a porosity of less than about 75%. **In** one embodiment, the microporous separator material has a porosity (void fraction) of at least about 25 vol %. **In** one embodiment, the microporous separator material will have a porosity of about 35-55%.

The binder for the microporous separator material may be selected from a wide range of inorganic or polymeric materials. For example, in one embodiment, the binder is an organic material selected from the group consisting of silicates, phosphates, aluminates, aluminosilicates, and hydroxides such as magnesium hydroxide, calcium hydroxide, etc. For example, in one embodiment, the binder is a fluoropolymer derived from monomers containing vinylidene fluoride, hexafluoropropylene, tetrafluoropropene, and the like. **In** another embodiment, the binder is a polyolefin such as polyethylene, polypropylene, or polybutene, having any of a range of varying molecular weights and densities. **In** another embodiment, the binder is selected from the group consisting of ethylene-diene-propene terpolymer, polystyrene, polymethyl methacrylate, polyethylene glycol, polyvinyl acetate, polyvinyl butyral, polyacetal, and polyethyleneglycol diacrylate. **In** another embodiment, the binder is selected from the group consisting of methyl cellulose, carboxymethyl cellulose, styrene rubber, butadiene rubber, styrene-butadiene rubber, isoprene rubber, polyacrylamide, polyvinyl ether, polyacrylic acid, polymethacrylic acid, and polyethylene oxide. **In** another embodiment, the binder is selected from the group consisting of acrylates, styrenes, epoxies, and silicones. **In** another embodiment, the binder is a copolymer or blend of two or more of the aforementioned polymers.

The particulate material comprised by the microporous separator material may also be selected from a wide range of materials. **In** general, such materials have a relatively low electronic and ionic conductivity at operating temperatures and do not corrode under the operating voltages of the battery electrode or current collector contacting the microporous separator material. For example, in one embodiment, the particulate material has a conductivity for carrier ions (e.g., lithium) of less than 1×10⁻⁴ Siemens/cm (S/cm). By way of further example, in one embodiment, the particulate material has a conductivity for carrier ions of less than 1 ×10⁻⁵ S/cm. By way of further example, in one embodiment, the particulate material has a conductivity for carrier ions of less than 1×10⁻⁶ S/cm. Exemplary particulate materials include particulate polyethylene, polypropylene, a TiO₂-polymer composite, silica aerogel, fumed silica, silica gel, silica hydrogel, silica xerogel, silica sol, colloidal silica, alumina, titania, magnesia, kaolin, talc, diatomaceous earth, calcium silicate, aluminum silicate, calcium carbonate, magnesium carbonate, or a combination thereof. For example, in one embodiment, the particulate material comprises a particulate oxide or nitride such as TiO₂, SiO₂, Al₂O₃, GeO₂, B₂O₃, Bi₂O₃, BaO, ZnO, ZrO₂, BN, Si₃N₄, and Ge3N4. See, for example, P. Arora and J. Zhang, "Battery Separators" Chemical Reviews 2004, 104, 4419-4462). In one embodiment, the particulate material will have an average particle size of about 20 nm to 2 µm, more typically 200 nm to 1.5 µm. In one embodiment, the particulate material will have an average particle size of about 500 nm to 1 µm.

In an alternative embodiment, the particulate material comprised by the microporous separator material may be bound by techniques such as sintering, binding, curing, etc. while maintaining the void fraction desired for electrolyte ingress to provide the ionic conductivity for the functioning of the battery.

In the secondary battery 100 (see FIG. 1), the microporous separator material of the separator layers 108 are permeated with a non-aqueous electrolyte suitable for use as a secondary battery electrolyte. Typically, the non-aqueous electrolyte comprises a lithium salt and/or mixture of salts dissolved in an organic solvent and/or solvent mixture. Exemplary lithium salts include inorganic lithium salts such as LiClO₄, LiBF₄, LiPF₆, LiAsF₆, LiCl, and LiBr; and organic lithium salts such as LiB(C₆H₅)₄, LiN(SO₂CF₃)₂, LiN(SO₂CF₃)₃, LiNSO₂CF₃, LiNSO₂CF₃, LiNS0₂C₄F₉, LiNSO₂C₃F₁₁, LiNSO₂C₆F₁₃, and LiNSO₂C₇F₁₅. Exemplary organic solvents to dissolve the lithium salt include cyclic esters, chain esters, cyclic ethers, and chain ethers. Specific examples of the cyclic esters include propylene carbonate, butylene carbonate, γ-butyrolactone, vinylene carbonate, 2-methyl-γ-butyrolactone, acetyl-γ-butyrolactone, and γ-valerolactone. Specific examples of the chain esters include dimethyl carbonate, diethyl carbonate, dibutyl carbonate, dipropyl carbonate, methyl ethyl carbonate, methyl butyl carbonate, methyl propyl carbonate, ethyl butyl carbonate, ethyl propyl carbonate, butyl propyl carbonate, alkyl propionates, dialkyl malonates, and alkyl acetates. Specific examples of the cyclic ethers include tetrahydrofuran, alkyltetrahydrofurans, dialkyltetrahydrofurans, alkoxytetrahydrofurans, dialkoxytetrahydrofurans, 1,3-dioxolane, alkyl-1,3-dioxolanes, and 1,4-dioxolane. Specific examples of the chain ethers include 1,2-dimethoxyethane, 1,2-diethoxythane, diethyl ether, ethylene glycol dialkyl ethers, diethylene glycol dialkyl ethers, triethylene glycol dialkyl ethers, and tetraethylene glycol dialkyl ethers.

### ADDITIONAL EMBODIMENTS OF THE PRESENT DISCLOSURE

When a secondary battery is assembled, the amount of carrier ions available for cycling between the anode and the cathode is often initially provided in the cathode, because cathodically active materials, such as lithium cobalt oxide, are relatively stable in ambient air (e.g., they resist oxidation) compared to lithiated anode materials such as lithiated graphite. When a secondary battery is charged for the first time, the carrier ions are extracted from the cathode and introduced into the anode. As a result, the anode potential is lowered significantly (toward the potential of the carrier ions), and the cathode potential is increased (to become even more positive). These changes in potential may give rise to parasitic reactions on both the cathode and the anode, but sometimes more severely on the anode. For example, a decomposition product comprising lithium (or other carrier ions) and electrolyte components, known as solid electrolyte interphase (SEI), may readily form on the surfaces of carbon anodes. These surfaces or covering layers are carrier ion conductors, which establish an ionic connection between the anode and the electrolyte and prevent the reactions from proceeding any further.

Although formation of the SEI layer is desired for the stability of a half-cell system comprising the anode and the electrolyte, a portion of the carrier ions introduced into the cells via the cathode is irreversibly bound and thus removed from cyclic operation, i.e., from the capacity available to the user. As a result, during the initial discharge, fewer carrier ions are returned to the cathode from the anode than was initially provided by the cathode during the initial charging operation, leading to irreversible capacity loss. During each subsequent charge and discharge cycle, the capacity losses resulting from mechanical and/or electrical degradation to the anode and/or the cathode tend to be much less per cycle, but even the relatively small carrier ion losses per cycle contribute significantly to reductions in energy density and cycle life as the battery ages. In addition, chemical and electrochemical degradation may also occur on the electrodes and cause capacity losses. To compensate for the formation of SEI (or another carrier ion-consuming mechanism such as mechanical and/or electrical degradation of the negative electrode), additional or supplementary carrier ions may be provided from an auxiliary electrode after formation of the battery.

In general, the positive electrode 208 of the secondary battery 100 (e.g., the collective population of the cathode structures 206 in the secondary battery 100) preferably has a reversible coulombic capacity that is matched to the discharge capacity of the negative electrode 209 (e.g., the collective population of the anode structures 207 in the secondary battery 100). Stated differently, the positive electrode 208 of the secondary battery 100 is sized to have a reversible coulombic capacity that corresponds to the discharge capacity of the negative electrode 209 which, in turn, is a function of the negative electrode 209 end of discharge voltage.

In some embodiments, the negative electrode 209 of the secondary battery 100 (e.g., the collective population of the anode structures 207 in the secondary battery 100) is designed to have a reversible coulombic capacity that exceeds the reversible coulombic capacity of the positive electrode 208. For example, in one embodiment, a ratio of the reversible coulombic capacity of the negative electrode 209 to the reversible coulombic capacity of the positive electrode 208 is at least 1.2:1, respectively. By way of further example, in one embodiment, a ratio of the reversible coulombic capacity of the negative electrode 209 to the reversible coulombic capacity of the positive electrode 208 is at least 1.3:1, respectively. By way of further example, in one embodiment, a ratio of the reversible coulombic capacity of the negative electrode 209 to the reversible coulombic capacity of the positive electrode 208 is at least 2:1, respectively. By way of further example, in one embodiment, a ratio of the reversible coulombic capacity of the negative electrode 209 to the reversible coulombic capacity of the positive electrode 208 is at least 3:1, respectively. By way of further example, a ratio of the reversible coulombic capacity of the negative electrode 209 to the reversible coulombic capacity of the positive electrode 208 is at least 4:1, respectively. By way of further example, a ratio of the reversible coulombic capacity of the negative electrode 209 to the reversible coulombic capacity of the positive electrode 208 is at least 5:1, respectively. Advantageously, the excess coulombic capacity of the negative electrode 209 provides a source of anodically active material to allow the secondary battery 100 to reversibly operate within a specified voltage that inhibits formation of crystalline phases (incorporating carrier ions) on the negative electrode 209 that reduce cycle-life of the negative electrode 209 as result of cycling.

As previously noted, the formation of SEI during the initial charge/discharge cycle reduces the amount of carrier ions available for reversible cycling. Mechanical and/or electrical degradation of the negative electrode 209 during cycling of the secondary battery 100 may further reduce the amount of carrier ions available for reversible cycling. To compensate for the formation of SEI (or another carrier ion-consuming mechanism such as mechanical and/or electrical degradation of the negative electrode), therefore, additional or supplementary carrier ions may be provided from an auxiliary electrode after formation of the secondary battery 100. In the embodiments of the present disclosure, the auxiliary electrode is used to electrochemically transfer additional carrier ions to the positive electrode 208 and/or the negative electrode 209 of the secondary battery 100 during and/or after formation. In one embodiment, the auxiliary electrode is removed after transferring the additional carrier ions to the secondary battery 100 in order to improve the energy density of the secondary battery in its final form.

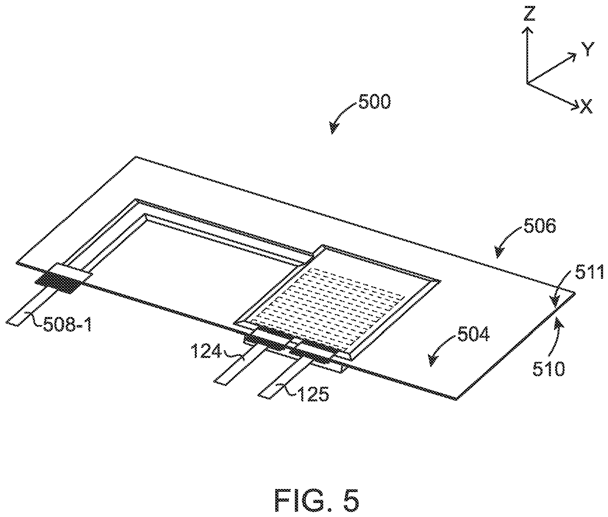

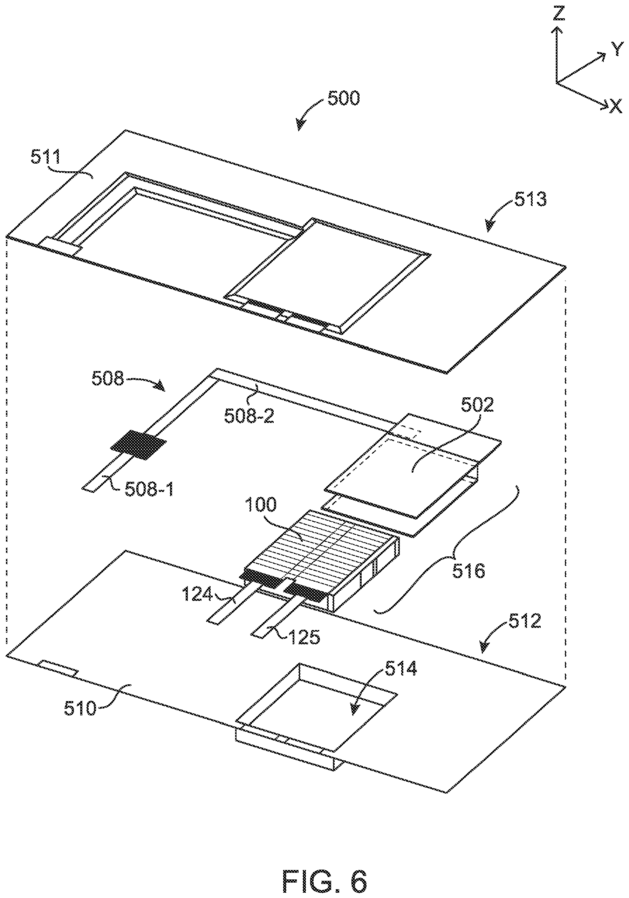

FIG. 5 is a perspective view of a buffer system 500 of an exemplary embodiment, and FIG. 6 is an exploded view of the buffer system 500. Generally, the buffer system 500 may be temporarily assembled during or after initial formation of the secondary battery 100 and the buffer system 500 is used to introduce additional carrier ions into the positive electrode 208 and/or the negative electrode 209 of the secondary battery 100 using an auxiliary electrode 502 (see FIG. 6). In this embodiment, the buffer system 500 includes an enclosure 504 that encapsulates the auxiliary electrode 502 (see FIG. 6) and the secondary battery 100 within a perimeter 506 of the enclosure 504. In FIG. 5, the electrical terminals 124, 125 of the secondary battery 100 and a segment of a conductive tab 508-1 extend from the perimeter 506 of the enclosure 504, providing electrical connections to the auxiliary electrode 502 and the secondary battery 100. In this embodiment, the enclosure 504 comprises a first enclosure layer 510 and a second enclosure layer 511 that are joined together to form the enclosure 504.

Referring to FIG. 6, the first enclosure layer 510 has a perimeter 512 and the second enclosure layer 511 has a perimeter 513. Each of the enclosure layers 510, 511 may comprise a flexible or semi-flexible material, such as aluminum, polymer, a thin film flexible metal, or the like. In one embodiment, one or more of the enclosure layers 510, 511 comprises a multi-layer aluminum polymer material, plastic, or the like. In another embodiment, one or more of the enclosure layers 510, 511 comprises a polymer material laminated on a metal substrate, such as aluminum. In one embodiment, the first enclosure layer 510 includes a pouch 514 (e.g., an indentation) that is sized and shaped to match the outer surface size and shape of the secondary battery 100.

The auxiliary electrode 502 partially surrounds the secondary battery 100 in the buffer system 500, and contains a source of carrier ions to replenish the lost energy capacity of the secondary battery 100 after formation (i.e., to compensate for the loss of carrier ions upon the formation of SEI and other carrier ion losses in the first charge and/or discharge cycle of the secondary battery 100). In embodiments, the auxiliary electrode 502 may comprise a foil of the carrier ions in metallic form (e.g., a foil of lithium, magnesium, or aluminum), or any of the previously mentioned materials used for the cathodically active material layers 106 and/or the anodically active material layers 104 (see FIG. 2) in their carrier ion-containing form. For example, the auxiliary electrode 502 may comprise lithiated silicon or a lithiated silicon alloy. When the buffer system 500 is assembled, the combination of the auxiliary electrode 502 and the secondary battery 100, which may be referred to as an auxiliary subassembly 516 (see FIG. 6), are inserted into the pouch 514, and the enclosure layers 510, 511 are sealed together to form the buffer system 500 as depicted in FIG. 5. The specific details of the assembly process for the buffer system 500 and how the buffer system 500 is used during a carrier ion transfer process to the secondary battery 100 will be discussed in more detail below. The auxiliary electrode 502 in this embodiment includes an electrically conductive tab 508, which may be segmented into a conductive tab 508-2 that is covered by the enclosure 504 and a conductive tab 508-1 that is partially exposed by the enclosure as depicted in FIG. 5, for example, for ease of manufacturing.

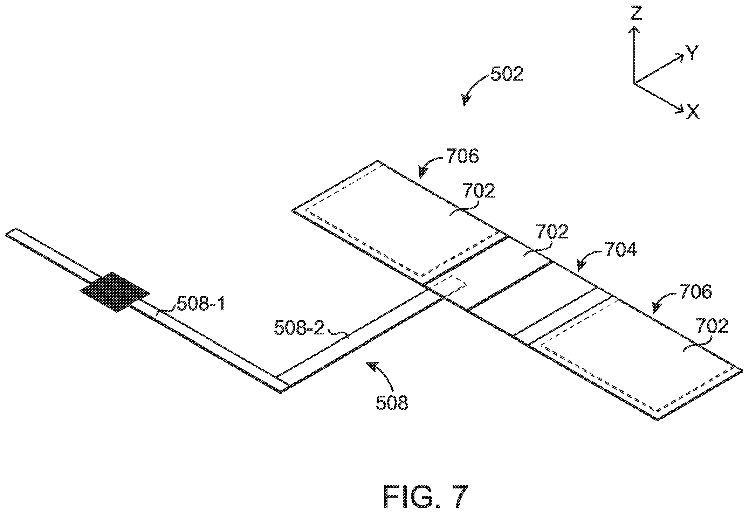

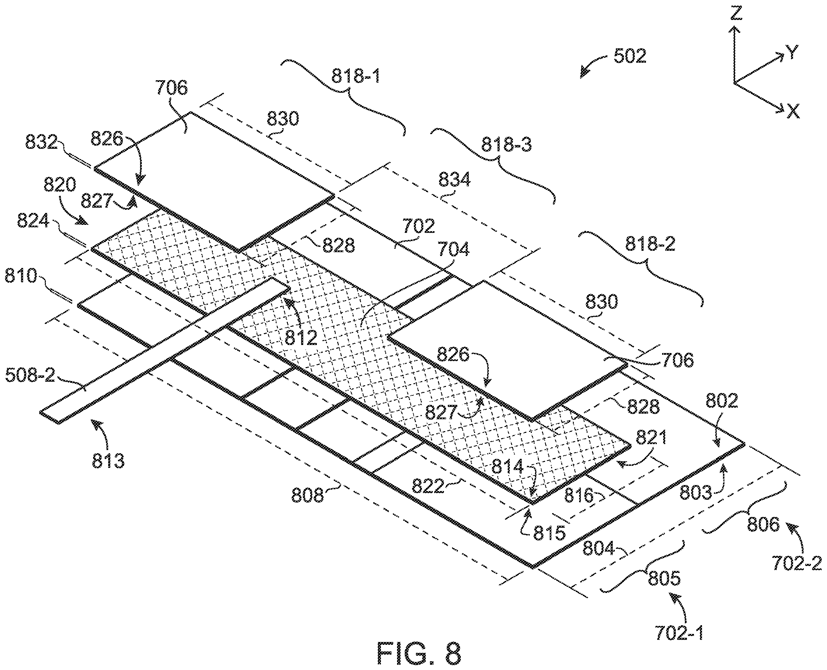

FIG. 7 is a perspective view of the auxiliary electrode 502 of an exemplary embodiment, and FIG. 8 is an exploded view of the auxiliary electrode. Referring to FIG. 7, the auxiliary electrode 502 generally includes a separator 702, which covers a conductive layer 704 and carrier ion supply layers 706. When the auxiliary electrode 502 is formed into the shape depicted in FIG. 6, the carrier ion supply layers 706 are located proximate to major surfaces 126, 127 of the secondary battery 100 (see FIG. 1), with the separator 702 insulating the casing 116 of the secondary battery 100 from the conductive layer 704 and the carrier ion supply layers 706. The separator 702 includes an electrolyte, which facilitates the transfer of carrier ions from the carrier ion supply layers 706 to the secondary battery 100 during a buffer process.

Referring to FIG. 8, the auxiliary electrode 502 includes, from bottom to top in FIG. 8, the separator 702, the conductive layer 704, and the population of carrier ion supply layers 706. The auxiliary electrode 502 in this embodiment further includes the conductive tab 508-2, which is electrically conductive and electrically coupled with the conductive layer 704. The conductive tab 508-2 provides an electrical connection with the auxiliary electrode 502. Generally, the auxiliary electrode 502 is used during the buffer process to transfer carrier ions from the carrier ion supply layers 706 to the positive electrode 208 and/or the negative electrode 209 of the secondary battery 100 during or after formation of the secondary battery 100.

The separator 702 may comprise any of the materials previously described with respect to the separator layer 108 of the secondary battery 100. The separator 702 may be permeated with an electrolyte that serves as a medium to conduct carrier ions from the carrier ion supply layers 706 to the positive electrode 208 of the secondary battery 100 and/or the negative electrode 209 of the secondary battery. The electrolyte may comprise any of the materials previously described with respect to the secondary battery 100.

The separator 702 in this embodiment includes a first surface 802 and a second surface 803 that opposes the first surface 802. The surfaces 802, 803 of the separator 702 form major surfaces for the separator 702 and are disposed in the X-Y plane in FIG. 8. The separator 702 in this embodiment has a width 804 that extends in a direction of the Y-axis. The separator 702 in this embodiment is segmented in the width 804 into a first portion 805 and a second portion 806. In some embodiments, the separator 702 may comprise a fist separator layer 702-1 corresponding to the first portion 805 and a second separator layer 702-2 corresponding to the second portion 806.

In one embodiment, the width 804 of the separator 702 is about 34 mm. In other embodiments, the width 804 of the separator is about 30 mm, about 35 mm, or another suitable value. In some embodiments, the width 804 of the separator 702 lies in a range of values of about 10 mm to about 200 mm, or some other suitable range that allows the separator 702 to function as described herein.

The separator 702, in one embodiment, has a length 808 that extends in a direction of the X-axis. In an embodiment, the length 808 of the separator 702 is about 72 mm. In other embodiments, the length 808 of the separator 702 is about 65 mm, about 70 mm, about 75 mm, or some other suitable value that allows the separator 702 to function as described herein. In some embodiments, the length 808 of the separator 702 lies in a range of values of about 30 mm to about 200 mm, or some other suitable range of values that allows the separator 702 to function as described herein.

In one embodiment, the separator 702 has a thickness 810 that extends in the direction of the Z-axis. Generally, the thickness 810 is a distance from the first surface 802 of the separator 702 to (and including) the second surface 803 of the separator. In one embodiment, the thickness 810 of the separator 702 is about 0.025 mm. In other embodiments, the thickness 810 of the separator 702 is about 0.015 mm, about 0.02 mm, about 0.03 mm, about 0.035 mm, or some other suitable value. In some embodiments, the thickness 810 of the separator 702 lies in a range of values of about 0.01 mm to about 1.0 mm, or some other suitable range of values that allows the separator 702 to function as described herein.

The conductive layer 704 is electrically conductive, and may comprise a metal, a metalized film, an insulating base material with a conductive material applied thereto, or some other type of electrically conductive material. **In** some embodiments, the conductive layer 704 comprises copper. **In** other embodiments, the conductive layer 704 comprises aluminum or another metal. **In** this embodiment, the conductive layer 704 is electrically coupled with the conductive tab 508-2, which is also electrically conductive. The conductive tab 508-2 has a first end 812 disposed proximate to the conductive layer 704 and a second end 813 disposed distal to the conductive layer 704 that opposes the first end 812. The first end 812 of the conductive tab 508-2 is electrically coupled to the conductive layer 704. **In** some embodiments, the first end 812 of the conductive tab 508-2 is spot-welded to the conductive layer 704. **In** other embodiments, the first end 812 of the conductive tab 508-2 is soldered to the conductive layer 704. Generally, the conductive tab 508-2 may be affixed at the first end 812 to the conductive layer 704 using any suitable means that ensure a mechanical connection and an electrical connection to the conductive layer. The conductive tab 508-2 may comprise any type of electrically conductive material as desired. **In** one embodiment, the conductive tab 508-2 comprises a metal. **In** these embodiments, the conductive tab 508-2 may comprise nickel, copper, aluminum, or other suitable metals or metal alloys that allows the conductive tab 508-2 to function as described herein.

The conductive layer 704 in this embodiment includes a first surface 814 and a second surface 815 that opposes the first surface 814. The surfaces 814, 815 of the conductive layer 704 form major surfaces for the conductive layer 704 and are disposed in the X-Y plane in FIG. 8. The conductive layer 704 in this embodiment has a width 816 that extends in a direction of the Y-axis. **In** an embodiment, the width 816 of the conductive layer 704 is about 15 mm. **In** other embodiments, the width 816 of the conductive layer 704 is about 10 mm, about 20 mm, or some other suitable value that allows the conductive layer 704 to function as described herein.

In some embodiments, the width 816 of the conductive layer 704 lies in a range of values of about 5 mm to about 100 mm, or some other suitable range of values that allows the conductive layer 704 to function as described herein. The first surface 814 of the conductive layer 704 in this embodiment is segmented into a first region 818-1, disposed proximate to a first end 820 of the conductive layer 704, a second region 818-2, disposed proximate to a second end 821 of the conductive layer 704, and a third region 818-3 disposed between the first region 818-1 and the second region 818-2.

The conductive layer 704 has a length 822 that extends in a direction of the X-axis. In one embodiment, the length 822 of the conductive layer 704 is about 70 mm. In other embodiments, the length 822 of the conductive layer 704 is about 60 mm, about 65 mm, about 75 mm, or some other suitable value that allows the conductive layer 704 to function as described herein. In some embodiments, the length 822 of the conductive layer 704 lies in a range of values of about 30 mm to about 200 mm, or some other suitable range of values that allows the conductive layer 704 to function as described herein.

The conductive layer 704 has a thickness 824 that extends in a direction of the Z-axis. Generally, the thickness 824 is a distance from the first surface 814 of the conductive layer 704 to (and including) the second surface 815 of the conductive layer 704. In one embodiment, the thickness 824 of the conductive layer 704 is about 0.1 mm. In other embodiments, the thickness 824 of the conductive layer 704 is about 0.005 mm, about 0.15 mm, or about 0.2 mm. In some embodiments, the thickness 824 of the conductive layer 704 lies in a range of values of about 0.01 mm to about 1.0 mm, or any other suitable range for the thickness that allows the conductive layer 704 to function as described herein.

The carrier ion supply layers 706, which comprise a population of carrier ion supply layers 706 in an embodiment, comprise any carrier ion containing material previously described that may be utilized to supply carrier ions to the positive electrode 208 and/or the negative electrode 209 of the secondary battery 100. The carrier ion supply layers 706 may comprise one or more sources of lithium ions, sodium ions, potassium ions, calcium ions, magnesium ions, and aluminum ions. In this embodiment, the carrier ion supply layers 706 are disposed within the first region 818-1 and the second region 818-2 of the conductive layer 704. **In** some embodiments, the carrier ion supply layers 706 are also disposed in the third region 818-3 of the conductive layer 704.

The carrier ion supply layers 706 in this embodiment include a first surface 826 and a second surface 827 that opposes the first surface 826. The surfaces 826, 827 of the carrier ion supply layers 706 form major surfaces for the carrier ion supply layers 706 and are disposed in the X-Y plane in FIG. 8. The carrier ion supply layers 706 in this embodiment have a width 828 that extends in a direction of the Y-axis. In an embodiment, the width 828 of the carrier ion supply layers 706 are about 15 mm. In other embodiments, the width 828 of the carrier ion supply layers 706 are about 10 mm, about 20 mm, or some other suitable value that allow the carrier ion supply layers 706 to function as described herein. **In** some embodiments, the width 828 of the carrier ion supply layers 706 lies in a range of values of about 5 mm to about 100 mm, or some other suitable range of values that allows the carrier ion supply layers 706 to function as described herein.

The carrier ion supply layers 706, in one embodiment, have a length 830 that extends in a direction of the X-axis. **In** an embodiment, the length 830 of the carrier ion supply layers 706 are about 23 mm. **In** other embodiments, the length 830 of the carrier ion supply layers 706 are about 15 mm, about 20 mm, about 25 mm, or some other suitable length that allows the carrier ion supply layers 706 to function as described herein. In some embodiments, the length 830 of the carrier ion supply layers 706 lie in a range of values of about 10 mm to about 100 mm, or some other suitable range of values that allow the carrier ion supply layers 706 to function as described herein.

The carrier ion supply layers 706 each have a thickness 832 that extends in a direction of the Z-axis. Generally, the thickness 832 is a distance between the first surface 826 of the carrier ion supply layers 706 and the second surface 827 of the carrier ion supply layers 706. In one embodiment, the thickness 832 of the carrier ion supply layers 706 are about 0.13 mm. In other embodiments, the thickness 832 of the carrier ion supply layers 706 are about 0.005 mm, about 0.15 mm, or about 0.2 mm. In some embodiments, the thickness 832 of the carrier ion supply layers 706 lie in a range of values of about 0.01 mm to about 1.0 mm, or any other suitable range of values for the thickness 832 that allows the carrier ion supply layers 706 to function as described herein.

In this embodiment, the carrier ion supply layers 706 are separated from each other by a distance 834, corresponding to the third region 818-3. In one embodiment, the distance 834 is about 23 mm. In other embodiments, the distance 834 is about 15 mm, about 20 mm, about 25 mm, or about 30 mm. In some embodiments, the distance 834 lies in a range of values of about 10 mm to about 50 mm, or any other suitable range of values that allows the carrier ion supply layers 706 to function as described herein.

In one embodiment, the carrier ion supply layers 706 are sized to be capable of providing at least 15% of the reversible coulombic capacity of the positive electrode 208 of the secondary battery 100. For example, in one such embodiment, the carrier ion supply layers 706 are sized such that they contain sufficient carrier ions (e.g., lithium, magnesium, or aluminum ions) to provide at least 30% of the reversible coulombic capacity of the positive electrode 208 of the secondary battery 100. By way of further example, in one such embodiment, the carrier ion supply layers 706 are sized such that they contain sufficient carrier ions to provide at least 100% of the reversible coulombic capacity of the positive electrode 208 of the secondary battery 100. By way of further example, in one such embodiment, the carrier ion supply layers 706 are sized such that they contain sufficient carrier ions to provide at least 200% of the reversible coulombic capacity of the positive electrode 208 of the secondary battery 100. By way of further example, in one such embodiment, the carrier ion supply layers 706 are sized such that they contain sufficient carrier ions to provide at least 300% of the reversible coulombic capacity of the positive electrode 208 of the secondary battery 100. By way of further example, in one such embodiment, the carrier ion supply layers 706 are sized such that they contain sufficient carrier ions to provide about 100% to about 200% of the reversible coulombic capacity of the positive electrode 208 of the secondary battery 100.

During an assembly process for the auxiliary electrode 502, the separator 702 may be cut from stock material or prefabricated to achieve the width 804 and the length 808 as shown in FIG. 8. The conductive layer 704 may be cut from stock material or prefabricated to achieve the width 816 and the length 822 shown in FIG. 8. In some embodiments, the conductive layer 704 is prefabricated to include the conductive tab 508-2 with the first end 812 mechanically and electrically affixed to the conductive layer 704 as depicted in FIG. 8. In other embodiments, the conductive tab 508-2 is cut from a stock material and mechanically and electrically coupled with the conductive layer 704 (e.g., by spot welding or soldering first end 812 to the conductive layer 704). In some embodiments, the carrier ion supply layers 706 are cut to size from stock materials, and bonded or otherwise laminated to the conductive layer 704 (e.g. by cold welding the carrier ion supply layers 706 onto the conductive layer 704) to achieve the orientation depicted in FIG. 8, with the second surface 827 of the carrier ion supply layers 706 in contact with the first surface 814 of the conductive layer 704. For example, the material used to form the carrier ion supply layers 706 (e.g., lithium) may exist in stock form as rolls of lithium sheets that are cut to size.

In other embodiments, the conductive layer 704 is prefabricated to include the carrier ion supply layers 706 arranged in the orientation depicted in FIG. 8. In this embodiment, the conductive layer 704 is disposed within the first portion 805 of the separator 702 in a direction of the X-axis, with the second surface 815 of the conductive layer 704 contacting the first surface 802 of the separator 702.

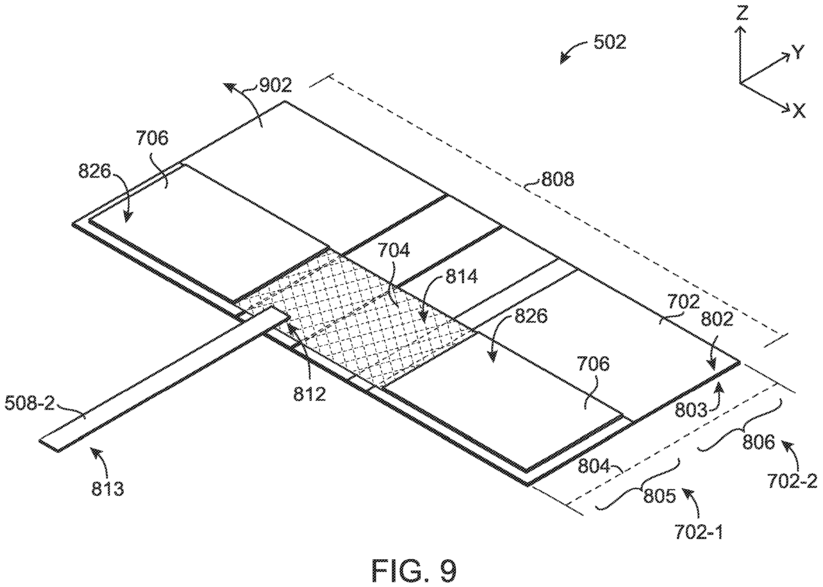

FIG. 9 is a perspective view of the auxiliary electrode 502 at an intermediate stage of the fabrication process for the auxiliary electrode. At this stage, the conductive layer 704 is disposed on the first portion 805 of the separator 702, and the conductive tab 508-2 extends to the left (in the Y-axis direction) in FIG. 9 from the first end 812, which is affixed to the conductive layer 704, away from the separator 702 and the conductive layer 704 towards the second end 813. The first surface 802 of the separator 702 is covered by the conductive layer 704 within the first portion 805 of the separator 702, while the first surface 802 of separator remains uncovered within the second portion 806 of the separator 702.

To continue the fabrication process of the auxiliary electrode 502, in one embodiment, the second portion 806 of the separator 702 is folded in the direction of an arrow 902 towards the left (about an axis parallel to the X-axis) in FIG. 9, such that the first surface 802 within the second portion 806 of the separator 702 contacts the first surfaces 826 of the carrier ion supply layers 706 and the first surface 814 of the conductive layer 704 that is exposed between the carrier ion supply layers 706. When the separator 702 comprises the first separator layer 702-1 and the second separator layer 702-2, the second separator layer may be placed such that the first surface 802 of the second separator layer contacts the first surfaces 826 of the carrier ion supply layers 706 and the first surface 814 of the conductive layer 704 that is exposed between the carrier ion supply layers 706.

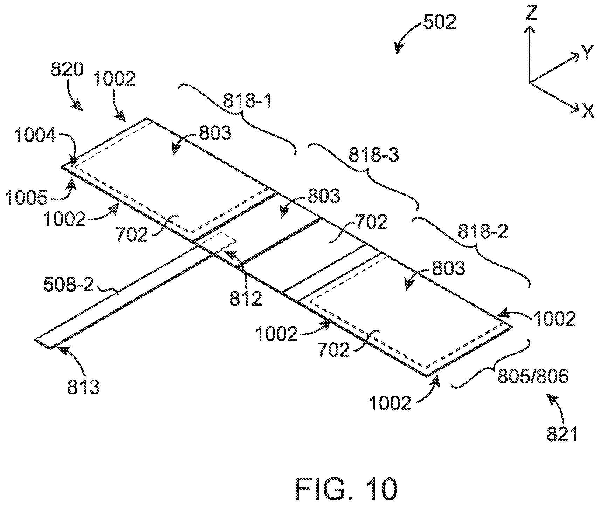

FIG. 10 is a perspective view of the auxiliary electrode 502 at another intermediate stage in the fabrication process, after folding the second portion 806 of the separator 702 as described above. At this stage, the separator 702 encapsulates the conductive layer 704 and the carrier ion supply layers 706, leaving a portion between the first end 812 of the conductive tab 508-2 and the second end 813 of the conductive tab 508-2 uncovered by the separator 702. The separator 702 may then be bonded to itself along at least a portion of an outer perimeter 1002 of the separator to encapsulate the conductive layer 704 within the first portion 805 of the separator and the second portion 806 of the separator along the first surface 802 of the separator (not visible in FIG. 10).

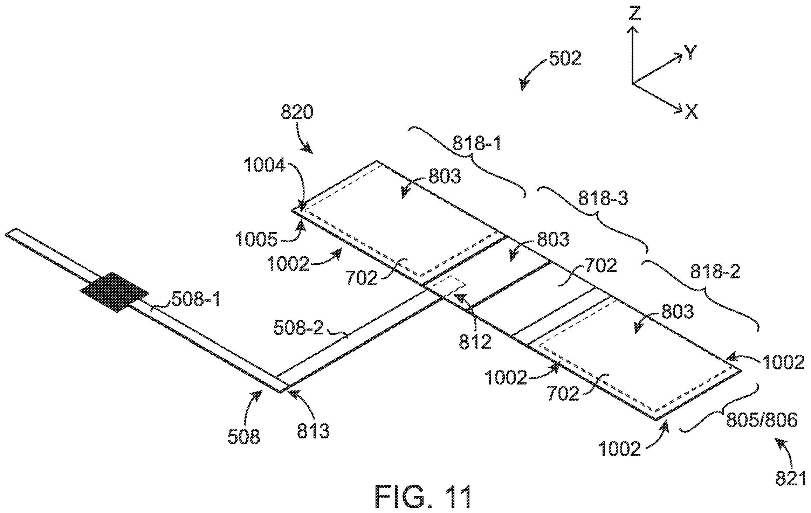

In one embodiment, the separator 702 is bonded to itself along at least a portion of an outer perimeter 1002 of the separator using a hot melt process, a welding process, a bonding process, etc. In FIG. 10, the auxiliary electrode 502 at this stage includes a first side 1004 and a second side 1005 that opposes the first side 1004. The first side 1004 includes the second surface 803 of the separator 702, which covers the carrier ion supply layers 706 in first region 818-1 proximate to first end 820 of the conductive layer 704 (not visible in FIG. 10) and the second region 818-2 proximate to the second end 821 of the conductive layer 704 (not visible in this view). In FIG. 10, the first region 818-1 is proximate to the first end 812 of the conductive tab 508-2 and the second region 818-2 is disposed away from the first end 812 of the conductive tab 508-2. The first end 812 of the conductive tab 508-2 is electrically coupled to the conductive layer 704 within the third region 818-3 of the conductive layer 704. In some embodiments, the conductive tab 508 may be extended (e.g., with the conductive tab 508-1, as shown in FIG. 11, which depicts the auxiliary electrode 502 after assembly).

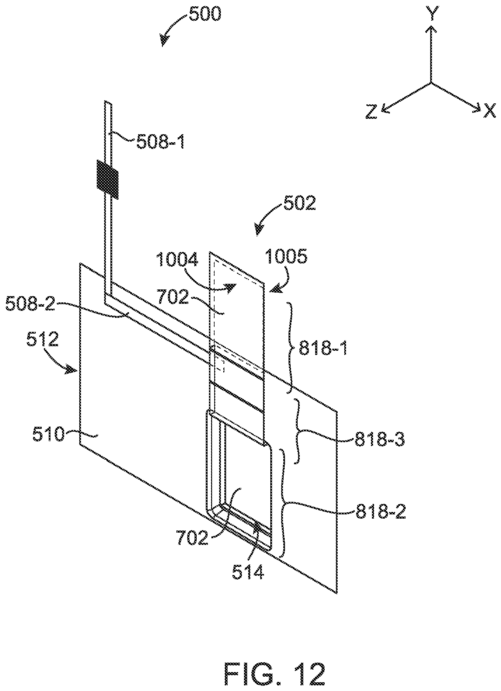

In response to fabricating the auxiliary electrode 502, performing a fabrication process for the buffer system 500 (see FIGS. 6 and 7) continues as follows. FIGS. 12-16 are perspective views of the buffer system 500 during various stages in a fabrication process. Referring to FIG. 12, the second region 818-2 of the auxiliary electrode 502 is inserted into the pouch 514 of the first enclosure layer 510, with the second side 1005 of the auxiliary electrode disposed towards the first enclosure layer 510 within the pouch 514 and the first side 1004 of the auxiliary electrode disposed away from the first enclosure layer 510 within the pouch 514. The third region 818-3 and the first region 818-1 of the auxiliary electrode 502 extend away from the pouch 514 in the direction of the Y-axis.

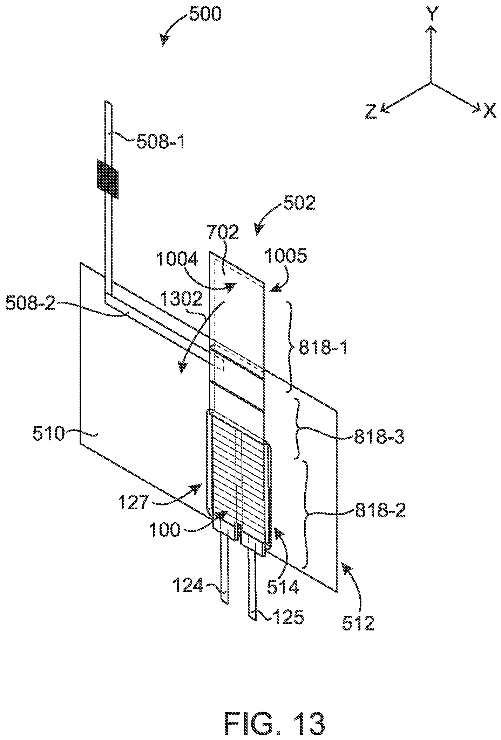

With the auxiliary electrode 502 oriented within the pouch 514 as depicted in FIG. 12, the secondary battery 100 is placed on the auxiliary electrode 502 within the pouch 514, which corresponds to the second region 818-2 of the auxiliary electrode 502 (see FIG. 13). In this embodiment, the first major surface 126 of the secondary battery 100 (see FIG. 1, not visible in FIG. 13) contacts the auxiliary electrode 502 within the pouch 514 and the second major surface 127 of the secondary battery is disposed away from the auxiliary electrode 502. The electrical terminals 124, 125 of the secondary battery 100 extend away from the pouch 514 in the direction of the Y-axis in FIG.13, placing the electrical terminals outside of the perimeter 512 of the first enclosure layer 510. At this stage of the fabrication process for the buffer system 500, in one embodiment, an electrolyte is added to the pouch 514. In another embodiment, the separator 702 of the auxiliary electrode 502 is pre-impregnated with the electrolyte.

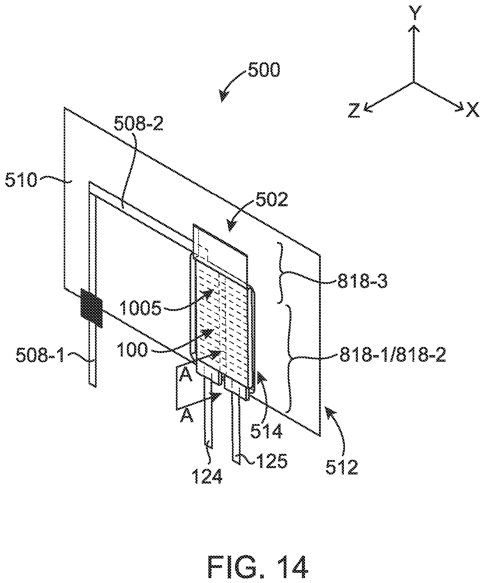

With the secondary battery 100 loaded onto the second region 818-2 of the auxiliary electrode 502 within the pouch 514, the auxiliary electrode 502 is folded in the direction of an arrow 1302 in order to position the first side 1004 of the first region 818-1 of the auxiliary electrode 502 in contact with the second major surface 127 of the secondary battery 100, the result of which is depicted in FIG. 14. In this configuration, both major surfaces 126, 127 of the secondary battery 100 (see FIG. 1) are electrochemically coupled with the carrier ion supply layers 706 of the auxiliary electrode 502, using the separator 702 (see FIGS. 7-11) and an electrolyte disposed between each of the major surfaces 126, 127 of the secondary battery 100 and the carrier ion supply layers 706.

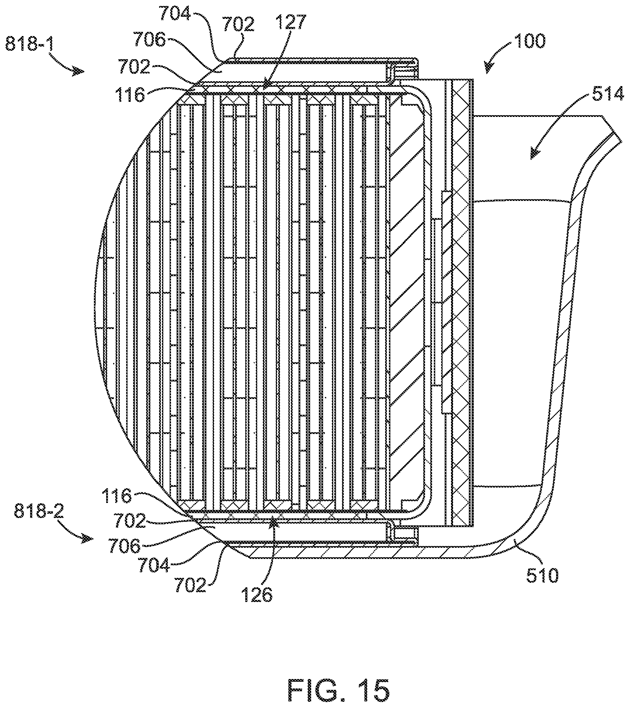

FIG. 15 is a cross-sectional view of the buffer system 500 along cut lines A-A of FIG. 14. In this view, the layers of the buffer system 500 at the pouch 514 of the first enclosure layer 510 are visible. In particular, FIG. 15 illustrates the placement of the secondary battery 100 and the auxiliary electrode 502 in the pouch 514, and specifically, from top to bottom in stacked succession, the separator 702, the conductive layer 704, one of the carrier ion supply layers 706, the separator 702, and the second major surface 127 of the secondary battery 100 at the casing 116. FIG. 15 further illustrates, from bottom to top in stacked succession, the first enclosure layer 510, the separator 702, the conductive layer 704, one of the carrier ion supply layers 706, the separator 702, and the first major surface 126 of the secondary battery 100 at the casing 116.

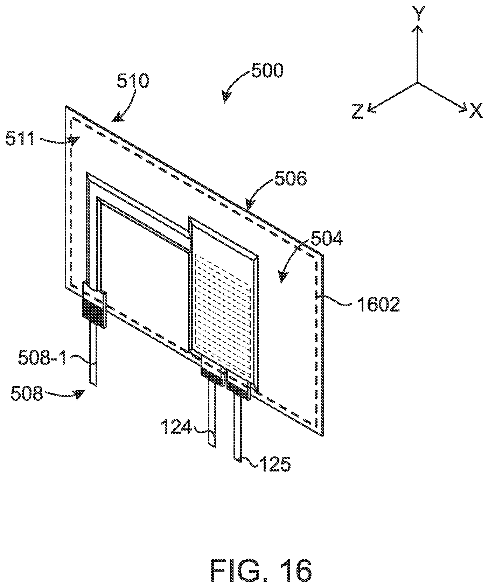

With the secondary battery 100 sandwiched by the auxiliary electrode 502 within the pouch 514 as illustrated in FIG. 15, the second enclosure layer 511 is aligned to the first enclosure layer 510, as depicted in FIG. 16. After proper placement of the second enclosure layer 511 relative to the first enclosure layer 510, the enclosure layers 510, 511 are sealed along a sealing line 1602 (denoted by the dashed line in FIG. 16) to form the enclosure 504. The enclosure layers 510, 511 may be sealed along the sealing line 1602 by welding, heat sealing, adhesive, combinations thereof, or the like. In another embodiment, the enclosure layers 510, 511 may be sealed along three sides of the sealing line 1602 creating a pocket therein. In this embodiment, the secondary battery 100 may be placed within the pocket, and the final edge of the sealing line 1602 is subsequently sealed. In one embodiment, the sealing line 1602 is sealed using a hot press, that applies a controlled temperature and pressure to the sealing line 1602 causing the enclosure layers 510, 511 to adhere or fuse together along the sealing line 1602. In another embodiment, a vacuum is applied to the secondary battery 100 during the sealing process to evacuate any excess volume occupied by air or other gas. The time for which the sealing line 1602 is subject to the hot press may be controlled and is dependent upon the materials selected for the enclosure layers 510, 511. Once sealed over the secondary battery 100, the sealed enclosure layers 510, 511 form the buffer system 500. Upon sealing, the buffer system 500 is liquid tight and/or air-tight, depending on the desired application. The electrical terminals 124 and 125 of the secondary battery 100 and the conductive tab 508-1 remain exposed and are not covered by the enclosure layers 510, 511 to allow for a subsequent buffer process to be applied to the secondary battery 100.

With the secondary battery 100 and the carrier ion supply layers 706 of the auxiliary electrode 502 (not visible in FIG. 16) electrochemically coupled together within the enclosure 504 of the buffer system 500, a carrier ion buffer process is performed on the secondary battery 100 during or after initial formation of the secondary battery 100. Generally, this carrier ion buffer process transfers carrier ions from the carrier ion supply layers 706 of the auxiliary electrode 502 into each of the first major surface 126 of the secondary battery 100 and the second major surface 127 of the secondary battery 100 (see FIG. 15). Generally, transferring the carrier ions to the secondary battery 100 from both major surfaces 126, 127 of the secondary battery 100, as depicted in FIG. 15, provides a technical benefit of distributing the forces generated by anode and/or cathode swelling more equally across the casing 116 of the secondary battery 100 as more carrier ions are loaded into the anode and/or the cathode of the secondary battery 100.

Either prior to inserting the secondary battery 100 into the buffer system 500, or after, the secondary battery 100 is charged (e.g., via the electrical terminals 124, 125) by transferring carrier ions from the cathode structures 206 of the secondary battery to the anode structures 207 of the secondary battery. Charging may be discontinued when the positive electrode 208 of the secondary battery 100 reaches its the end-of-charge design voltage. During the initial charging cycle, SEI may form on the surfaces of the anode structures 207 of the secondary battery 100. To compensate for the loss of carrier ions to SEI, and to further provide additional carrier ions to mitigate the long term secondary reactions during cycling where carrier ions are lost due to side reactions, the positive electrode 208 and/or the negative electrode 209 of the secondary battery 100 may be replenished by applying a voltage across the auxiliary electrode 502 and the cathode structures 206 and/or the anode structures 207 (e.g., via the conductive tab 508-1 of the auxiliary electrode 502 and one of the electrical terminals 124, 125) to drive carrier ions from the carrier ion supply layers 706 of the auxiliary electrode 502 to the cathode structures 206 and/or the anode structures 207 of the secondary battery 100. Once the transfer of carrier ions from the auxiliary electrode 502 to the secondary battery 100 is complete, the negative electrode 209 of the secondary battery 100 is again charged, this time with carrier ions transferred from the cathode structures 206 of the secondary battery 100 to the anode structures 207 of the secondary battery.

**In** one embodiment, the amount of carrier ions transferred from the auxiliary electrode 502 to the secondary battery 100 during the buffer process is about 50% of the reversable columbic capacity of the positive electrode 208 of the secondary battery 100. In other embodiments, the amount of carrier ions transferred from the auxiliary electrode 502 to the secondary battery 100 during the buffer process is about 55%, about 60%, about 65%, about 70%, about 75%, about 80%, about 85%, about 90%, about 95%, or about 100% of the reversable columbic capacity of the positive electrode 208 of the secondary battery 100. In some embodiments, the amount of carrier ions transferred from the auxiliary electrode 502 to the secondary battery 100 lies in a range of values of about 1% to about 100% of the reversable columbic capacity of the positive electrode 208 of the secondary battery 100. In one particular embodiment, the negative electrode 209 of the secondary battery 100 has about 170% of the reversable columbic capacity of the positive electrode 208 of the secondary battery 100 stored as carrier ions when the secondary battery 100 is charged, and about 70% of the reversable columbic capacity of the positive electrode 208 of the secondary battery 100 stored as carrier ions when the secondary battery 100 is discharged. An excess of carrier ions at the negative electrode 209 of the secondary battery 100 provided during the buffer process provides a technical benefit of mitigating the loss of carrier ions at the secondary battery 100 due to SEI at initial formation. Further, an excess of carrier ions at the negative electrode 209 of the secondary battery 100 provided during the buffer process provides a technical benefit of mitigating the loss of carrier ions at the secondary battery 100 due to side reactions that deplete carrier ions in the secondary battery 100 as the secondary battery 100 is cycled during use, which reduces the capacity loss of the secondary battery 100 over time.

In some embodiments, transferring carrier ions from the auxiliary electrode 502 to the secondary battery 100 may occur concurrently with an initial formation of the secondary battery 100 (e.g., during the first charge of the secondary battery 100), and/or during a subsequent charge of the secondary battery 100 after initial formation. In these embodiments, carrier ions are transferred from the positive electrode 208 of the secondary battery 100 to the negative electrode 209 of the secondary battery 100. Concurrently with or based on a temporal delay or a temporal pattern, carrier ions are transferred from the auxiliary electrode 502 to the positive electrode 208 and/or the negative electrode 209 of the secondary battery 100.

**In** yet another embodiment, the positive electrode 208 may be replenished with carrier ions by simultaneously transferring carrier ions from the auxiliary electrode 502 to the positive electrode 208 of the secondary battery 100, while also transferring carrier ions from the positive electrode 208 of the secondary battery 100 to the negative electrode 209 of the secondary battery 100. Referring to FIG. 6, a voltage is applied across the electrical terminals 124, 125 of the secondary battery 100, to drive carrier ions from the positive electrode 208 to the negative electrode 209 of the secondary battery 100. While the carrier ions are being transferred from the positive electrode 208 to the negative electrode 209, a voltage is applied across the conductive tab 508-1 of the auxiliary electrode 502 and the positive electrode 208 of secondary battery 100 to drive carrier ions from the auxiliary electrode 502 to the positive electrode 208 of the secondary battery 100. Thus, carrier ions are transferred from the auxiliary electrode 502 to the positive electrode 208 of the secondary battery 100 at the same time that carrier ions are being transferred from the positive electrode 208 to the negative electrode 209 of the secondary battery 100. That is, a voltage is maintained across the positive electrode 208 and the negative electrode 209 of the secondary battery 100 that is sufficient to drive carrier ions from the positive electrode 208 to the negative electrode 209 of the secondary battery 100, at the same time that a voltage is maintained across the conductive tab 508-1 of the auxiliary electrode 502 and the positive electrode 208 of the secondary battery 100 that is sufficient to drive carrier ions from the auxiliary electrode 502 to the positive electrode 208. In another embodiment, the onset of transfer of carrier ions from the auxiliary electrode 502 to the positive electrode 208 of the secondary battery 100 may commence simultaneously with onset of the transfer of carrier ions from the positive electrode 208 to the negative electrode 209 of the secondary battery 100. In one embodiment, the rate of transfer of carrier ions from the positive electrode 208 to the negative electrode 209 of the secondary battery 100 is greater than or equal to the rate of transfer of carrier ions from the auxiliary electrode 502 to the positive electrode 208 of the secondary battery 100, such that a good overall rate of transfer of carrier ions from the auxiliary electrode 502 to the negative electrode 209 of the secondary battery 100 via the positive electrode 208 can be maintained. That is, the relative rates of transfer between the positive electrode 208 and the negative electrode 209 of the secondary battery 100, and the auxiliary electrode 502 and the positive electrode 208, may be maintained such that the overall capacity of the positive electrode 208 for additional carrier ions is not exceeded. The positive electrode 208 may thus be maintained in a state where it has the ability to accept new carrier ions from the auxiliary electrode 502, which may allow for subsequent transfer of carrier ions to the negative electrode 209 of the secondary battery 100.

In one embodiment, without being limited by any particular theory, the carrier ions are transferred from the auxiliary electrode 502 to the positive electrode 208 of the secondary battery 100 as a part of the replenishment of the negative electrode 209 of the secondary battery 100 (as opposed to transferring from the auxiliary electrode 502 directly to the negative electrode 209 of the secondary battery), because the positive electrode 208 may be capable of more uniformly accepting carrier ions across the surface thereof, thus allowing the carrier ions to more uniformly participate in the transfer thereof between the positive electrode 208 and the negative electrode 209 of the secondary battery 100.

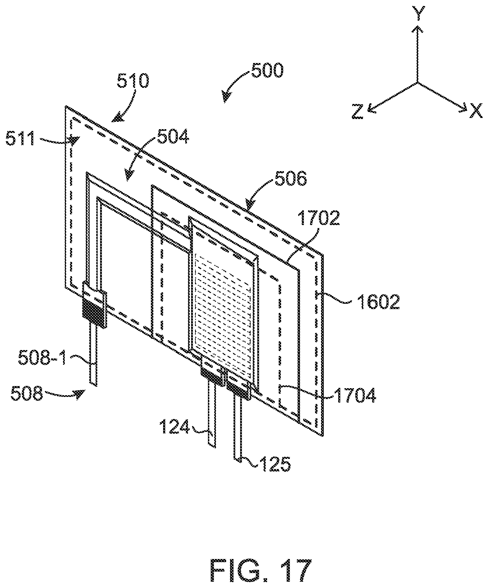

After the buffer process is performed on the secondary battery 100 utilizing the buffer system 500, the auxiliary electrode 502 may be removed from the buffer system 500 in order to improve the energy density of the secondary battery 100 in its final form. For example, after the buffer process, the carrier ion supply layers 706 (see FIG. 7) may have been removed from the conductive layer 704, having been electrochemically transferred to the secondary battery 100. Thus, the auxiliary electrode 502 may be superfluous at this point. To remove the auxiliary electrode 502 from the enclosure 504 after the buffer process is performed, the enclosure layers 510, 511 of the enclosure may be cut along cut lines 1702, illustrated in FIG. 17 as solid lines, allowing the enclosure layers 510, 511 to be peeled back proximate to the auxiliary electrode 502. The auxiliary electrode 502 is removed from the enclosure 504 of the buffer system 500, while the secondary battery 100 remains within the pouch 514 (see FIG. 12). The enclosure layers 510, 511 may then be re-sealed along a final sealing line 1704 illustrated as dashed lines to form the enclosure 504 in its final form prior to placing the secondary battery 100 in service. This re-seal may be performed using any of the previously described processes for sealing the first enclosure layer 510 and the second enclosure layer 511 together.

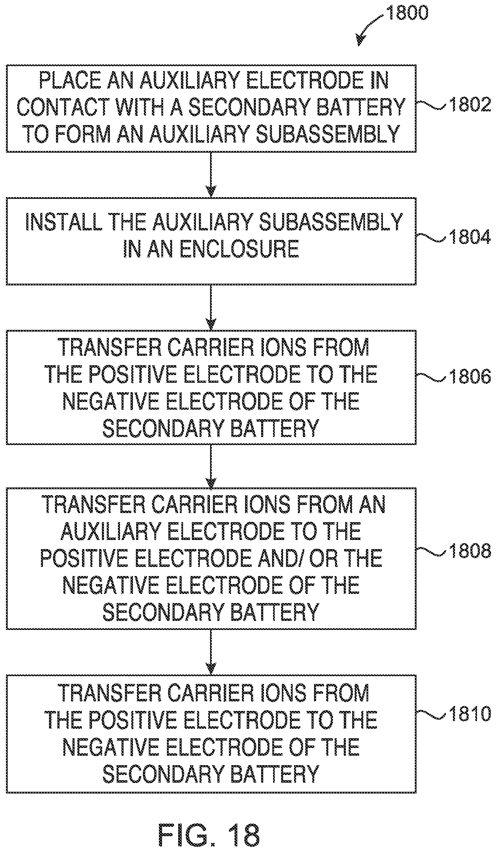

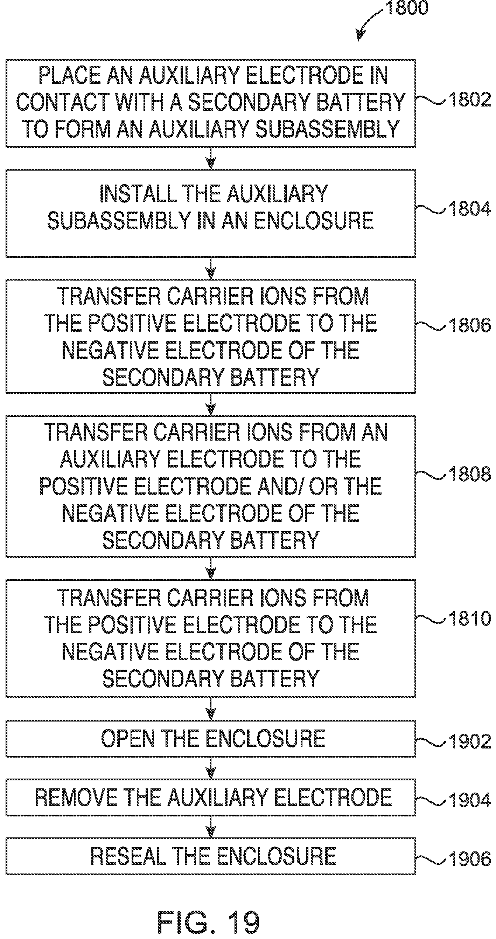

FIG. 18 is a flow chart of a method 1800 of buffering a secondary battery with carrier ions using an auxiliary electrode of an exemplary embodiment, and FIGS. 19-21 are flow charts depicting additional details of the method 1800. The method 1800 will be described with respect to the secondary battery 100, the buffer system 500, and the auxiliary electrode 502 of FIGS. 1-17, although the method 1800 may apply to other systems, not shown. The steps of the method 1800 are not all inclusive, and the method 1800 may include other steps, not shown. Further, the steps of the method 1800 may be performed in an alternate order.

In this embodiment, the secondary battery 100 (see FIG. 1) has major surfaces 126, 127 that oppose each other, and the electrical terminals 124, 125. The electrical terminals 124, 125 are coupled to one of the positive electrode 208 of the secondary battery 100 (e.g., the population of the cathode structures 206 in the secondary battery 100, as depicted in FIG. 2) and the negative electrode 209 of the secondary battery 100 (e.g., the population of the anode structures 207 in the secondary battery 100, as depicted in FIG. 2). The secondary battery 100 comprises the microporous separator layer 108 (see FIG. 2) between the negative electrode 209 and the positive electrode 208 that is permeated with an electrolyte in ionic contact with the negative electrode 209 and the positive electrode 208. The negative electrode 209 comprises the anodically active material layer 104, such as silicon or an alloy thereof, having a coulombic capacity for the carrier ions. The positive electrode 208 comprises the cathodically active material layer 106, having a coulombic capacity for the carrier ions, with a negative electrode 209 coulombic capacity exceeding a positive electrode 208 coulombic capacity.

The auxiliary electrode 502 (see FIG. 6) is placed in contact with the major surfaces 126, 127 of the secondary battery 100 to form the auxiliary subassembly 516, where the auxiliary electrode 502 includes the electrically conductive layer 704, the carrier ion supply layers 706 disposed on the conductive layer 704 that are proximate to the major surfaces 126, 127 of the secondary battery 100, the separator 702 disposed between the carrier ion supply layers 706 and the major surfaces 126, 127 of the secondary battery, and the electrically conductive tab 508 coupled to the conductive layer 704 (see step 1802 of FIG. 18, and FIGS. 12-15).

The auxiliary subassembly 516 is installed in the enclosure 504, where the electrical terminals 124, 125 of the secondary battery 100 and the electrically conductive tab 508 of the auxiliary electrode 502 electrically extend from the perimeter 506 of enclosure 504 (see step 1804, and FIG. 16).

Carrier ions are transferred from the positive electrode 208 of the secondary battery 100 to the negative electrode 209 of the secondary battery 100 to at least partially charge the secondary battery 100 by applying a potential voltage across the electrical terminals 124, 125 (see step 1806). Charging may be discontinued when the positive electrode 208 of the secondary battery 100 reaches its the end-of-charge design voltage. During the initial charging cycle, SEI may form on the internal structural surfaces of the negative electrode 209 of the secondary battery 100.

To compensate for the loss of carrier ions to SEI, and to further provide additional carrier ions to mitigate the long term secondary reactions during cycling where carrier ions are lost due to side reactions, carrier ions are transferred from the carrier ion supply layers 706 of the auxiliary electrode 502 to the positive electrode 208 and/or the negative electrode 209 of the secondary battery 100 by applying a potential voltage across the electrically conductive tab 508 of the auxiliary electrode 502 and one or more of the electrical terminals 124, 125 of the secondary battery 100 (see step 1808, FIG. 16). Generally, this carrier ion buffer process transfers carrier ions from the carrier ion supply layers 706 of the auxiliary electrode 502 into each of the first major surface 126 of the secondary battery 100 and the second major surface 127 of the secondary battery 100 (see FIG. 15). Generally, transferring carrier ions to the secondary battery 100 from both of the major surfaces 126, 127 of the secondary battery 100, as depicted in FIG. 15, provides a technical benefit of distributing the forces generated by anode and/or cathode swelling more equally across the casing 116 of the secondary battery 100 as more carrier ions are loaded into the cathode and/or the anode of the secondary battery 100.

In one embodiment, the amount of carrier ions transferred from the auxiliary electrode 502 to the secondary battery 100 is about 50% of the reversable columbic capacity of the positive electrode 208 of the secondary battery 100. In other embodiments, the amount of carrier ions transferred from the auxiliary electrode 502 to the secondary battery 100 is about 55%, about 60%, about 65%, about 70%, about 75%, about 80%, about 85%, about 90%, about 95%, or about 100% of the reversable columbic capacity of the positive electrode 208 of the secondary battery 100. In some embodiments, the amount of carrier ions transferred from the auxiliary electrode 502 to the secondary battery 100 lies in a range of values of about 1% to about 100% of the reversable columbic capacity of the positive electrode 208 of the secondary battery 100. In one particular embodiment, the negative electrode 209 of the secondary battery 100 has about 170% of the reversable columbic capacity of the positive electrode 208 of the secondary battery 100 stored as carrier ions when the secondary battery 100 is charged, and about 70% of the reversable columbic capacity of the positive electrode 208 of the secondary battery 100 stored as carrier ions when the secondary battery 100 is discharged. An excess of carrier ions at the negative electrode 209 of the secondary battery 100 provided during the buffer process provides a technical benefit of mitigating the loss of carrier ions at the secondary battery 100 due to SEI at initial formation. Further, an excess of carrier ions at the negative electrode 209 of the secondary battery 100 provided during the buffer process provides a technical benefit of mitigating the loss of carrier ions at the secondary battery 100 due to side reactions that deplete carrier ions in the secondary battery 100 as the secondary battery 100 is cycled during use, which reduces the capacity loss of the secondary battery 100 over time.

In some embodiments, transferring carrier ions from the auxiliary electrode 502 to the secondary battery 100 may occur concurrently with an initial formation of the secondary battery 100 (e.g., during the first charge of the secondary battery 100), and/or during a subsequent charge of the secondary battery 100 after initial formation. In these embodiments, carrier ions are transferred from the positive electrode 208 of the secondary battery 100 to the negative electrode 209 of the secondary battery 100. Concurrently with or based on a temporal delay or a temporal pattern, carrier ions are transferred from the auxiliary electrode 502 to the positive electrode 208 and/or the negative electrode 209 of the secondary battery 100.

Carrier ions are again transferred from the positive electrode 208 of the secondary battery 100 to the negative electrode 209 of the secondary battery 100 to charge the secondary battery 100 by applying a potential voltage across the electrical terminals 124, 125 of the secondary battery 100 until the negative electrode 209 has greater than 100% of the positive electrode 208 coulombic capacity stored as the carrier ions (see step 1810).

In yet another embodiment, the positive electrode 208 may be replenished with carrier ions by simultaneously transferring carrier ions from the auxiliary electrode 502 to the positive electrode 208 of the secondary battery 100, while also transferring carrier ions from the positive electrode 208 of the secondary battery 100 to the negative electrode 209 of the secondary battery 100. Referring to FIG. 6, a voltage is applied across the electrical terminals 124, 125 of the secondary battery 100, to drive carrier ions from the positive electrode 208 to the negative electrode 209 of the secondary battery 100. While the carrier ions are being transferred from the positive electrode 208 to the negative electrode 209, a voltage is applied across the conductive tab 508-1 of the auxiliary electrode 502 and the positive electrode 208 of secondary battery 100 to drive carrier ions from the auxiliary electrode 502 to the positive electrode 208 of the secondary battery 100. Thus, carrier ions are transferred from the auxiliary electrode 502 to the positive electrode 208 of the secondary battery 100 at the same time that carrier ions are being transferred from the positive electrode 208 to the negative electrode 209 of the secondary battery 100. That is, a voltage is maintained across the positive electrode 208 and the negative electrode 209 of the secondary battery 100 that is sufficient to drive carrier ions from the positive electrode 208 to the negative electrode 209 of the secondary battery 100, at the same time that a voltage is maintained across the conductive tab 508-1 of the auxiliary electrode 502 and the positive electrode 208 of the secondary battery 100 that is sufficient to drive carrier ions from the auxiliary electrode 502 to the positive electrode 208. In another embodiment, the onset of transfer of carrier ions from the auxiliary electrode 502 to the positive electrode 208 of the secondary battery 100 may commence simultaneously with onset of the transfer of carrier ions from the positive electrode 208 to the negative electrode 209 of the secondary battery 100. In one embodiment, the rate of transfer of carrier ions from the positive electrode 208 to the negative electrode 209 of the secondary battery 100 is greater than or equal to the rate of transfer of carrier ions from the auxiliary electrode 502 to the positive electrode 208 of the secondary battery 100, such that a good overall rate of transfer of carrier ions from the auxiliary electrode 502 to the negative electrode 209 of the secondary battery 100 via the positive electrode 208 can be maintained. That is, the relative rates of transfer between the positive electrode 208 and the negative electrode 209 of the secondary battery 100, and the auxiliary electrode 502 and the positive electrode 208, may be maintained such that the overall capacity of the positive electrode 208 for additional carrier ions is not exceeded. The positive electrode 208 may thus be maintained in a state where it has the ability to accept new carrier ions from the auxiliary electrode 502, which may allow for subsequent transfer of carrier ions to the negative electrode 209 of the secondary battery 100.

In one embodiment, without being limited by any particular theory, the carrier ions are transferred from the auxiliary electrode 502 to the positive electrode 208 of secondary battery 100 as a part of the replenishment of the negative electrode 209 of the secondary battery 100 (as opposed to transferring from the auxiliary electrode 502 directly to the negative electrode 209 of the secondary battery), because the positive electrode 208 may be capable of more uniformly accepting carrier ions across the surface thereof, thus allowing the carrier ions to more uniformly participate in the transfer thereof between the positive electrode 208 and the negative electrode 209 of the secondary battery 100.

In some embodiments of the method 1800, the enclosure 504 is opened (see step 1902 of FIG. 19), and the auxiliary electrode 502 is removed from the enclosure 504 (see step 1904). In response to removing the auxiliary electrode 502 from the enclosure 504, the enclosure is resealed into its final form to encapsulate the secondary battery 100 for use (see step 1906).

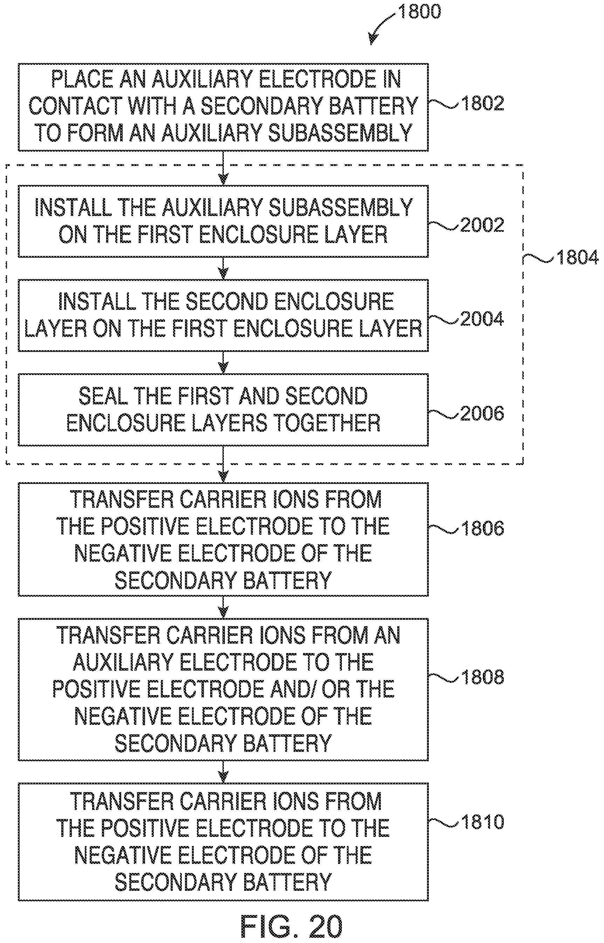

Although installing the auxiliary subassembly 516 in the enclosure 504 as previously described with respect to step 1804 detailed above, one particular embodiment comprises installing the auxiliary subassembly 516 on the first enclosure layer 510 (see step 2002 of FIG. 20). The second enclosure layer 511 is installed on the first enclosure layer 510 (see step 2004), and the first enclosure layer 510 and the second enclosure layer 511 are sealed together along the sealing line 1602 to form the enclosure 504 (see step 2006).

The enclosure layers 510, 511 may be sealed along the sealing line 1602 (see FIG. 16) by welding, heat sealing, adhesive, combinations thereof, or the like. In another embodiment, the enclosure layers 510, 511 may be sealed along three sides of the sealing line 1602 creating a pocket therein. In this embodiment, the secondary battery 100 may be placed within the pocket, and the final edge of the sealing line 1602 is subsequently sealed. In one embodiment, the sealing line 1602 is sealed using a hot press, that applies a controlled temperature and pressure to the sealing line 1602 causing the enclosure layers 510, 511 to adhere or fuse together along the sealing line 1602. In another embodiment, a vacuum is applied to the secondary battery 100 during the sealing process to evacuate any excess volume occupied by air or other gas. The time for which the sealing line 1602 is subject to the hot press may be controlled and is dependent upon the materials selected for the enclosure layers 510, 511. Once sealed over the secondary battery 100, the sealed enclosure layers 510, 511 form the buffer system 500. Upon sealing, the buffer system 500 is liquid tight and/or air-tight, depending on the desired application. The electrical terminals 124, 125 of the secondary battery 100 and the conductive tab 508 remain exposed and are not covered by the enclosure layers 510, 511.

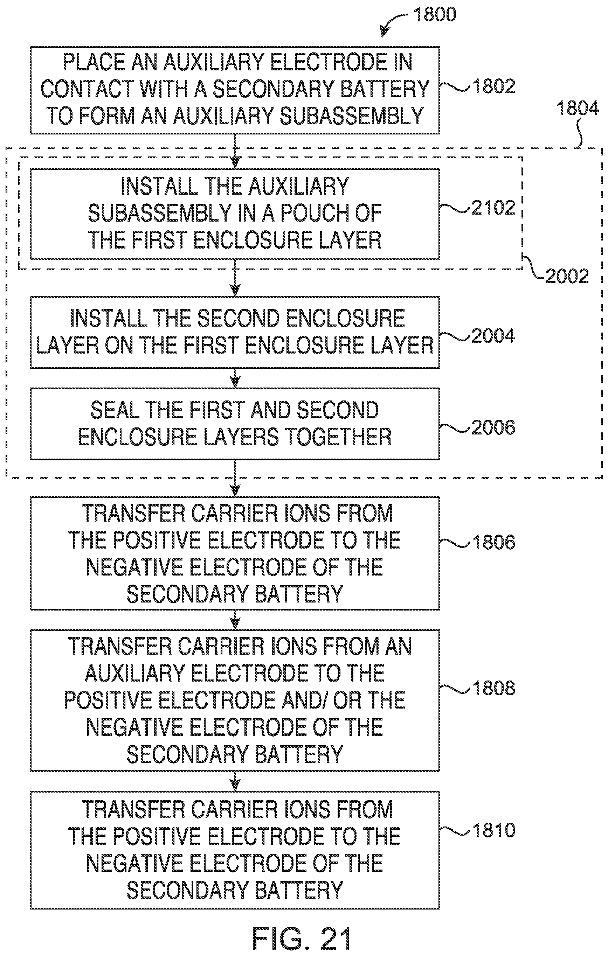

In embodiments where the first enclosure layer 510 includes the pouch 514, installing the auxiliary subassembly 516 within the enclosure 504 initially comprises placing the auxiliary subassembly 516 within the pouch 514 (see step 2102 of FIG. 21). In some embodiments, an electrolyte is added to the pouch 514 (e.g., either before or after installing the auxiliary subassembly 516 in the pouch 514), with the enclosure 504 formed subsequent thereto by sealing the first enclosure layer 510 and the second enclosure layer 511 together along the sealing line 1602.

Embodiments of the present disclosure utilize auxiliary electrodes to transfer or buffer carrier ions to a secondary battery during or subsequent to, initial formation of the secondary battery. Transferring or buffering carrier ions to the secondary battery mitigates carrier ion losses during formation due to, for example, SEI, thereby providing a technical benefit of improving the capacity of the secondary battery. Further, transferring or buffering carrier ions to the secondary battery provides the negative electrode of the secondary battery additional carrier ions beyond the coulombic capacity of the positive electrode of the secondary battery, thereby providing a reservoir of addition carrier ions over the cycle life of the secondary battery, further mitigating carrier ion loss during cycling due to side reactions which remove the carrier ions from availability during cycling. The result of the additional carrier ions at the negative electrode provides a further technical benefit of reducing the amount of capacity loss in the secondary battery from one discharge-charge cycle to the next, thereby improving the overall capacity of the secondary battery during its cycle life.

The embodiments are provided to illustrate various aspects of the present disclosure. The embodiments are not intended to be limiting and therefore, the present disclosure further supports other aspects and/or embodiments not specifically provided.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. An auxiliary electrode for a secondary battery, the auxiliary electrode comprising:
a conductive layer having a first major surface in an X-Y plane, the conductive layer comprising a material that is electrically conductive and having a first surface area,
a first carrier ion supply layer and a second carrier ion supply layer, each of the first carrier ion supply layer and the second carrier ion supply layer comprising a material that supplies carrier ions for an electrode of the secondary battery, wherein the first carrier ion supply layer covers a first region of the first major surface of the conductive layer and the second carrier ion supply layer covers a second region of the first major surface of the conductive layer;
wherein the first region and the second region are separated by a third region of the conductive layer extending between the first region and the second region; the third region configured to be folded along a Y-axis direction such that in a folded configuration, the first region and the second region are substantially parallel; and the third region being substantially perpendicular to the first region and the second region in the folded configuration; and a separator layer disposed on the first carrier ion supply layer and the second carrier ion supply layer.

2. The auxiliary electrode of claim 1, wherein in the folded configuration a perimeter of the first carrier ion supply layer substantially aligns with a perimeter of the second carrier ion supply layer; or
wherein a combined surface area of the first carrier ion supply layer and the second carrier ion supply layer is greater than a surface area of the third region.

3. The auxiliary electrode of claim 1, wherein the separator layer comprises a first separator layer disposed on and coextensive with the first carrier ion supply layer; and preferably wherein the separator layer comprises a second separator layer disposed on and coextensive with the second carrier ion supply layer; and preferably a third separator layer, the third separator layer disposed on a second major surface of the conductive layer that opposes the first major surface.

4. The auxiliary electrode of claim 3, wherein the first separator layer, the second separator layer, and/or the third separator layer are continuous; or wherein
the first separator layer and the third separator layer are mechanically bonded together around at least a portion of a perimeter of the first separator layer and the third separator layer; or wherein
the second separator layer and the third separator layer are mechanically bonded together around at least a portion of a perimeter of the second separator layer and the third separator layer.

5. The auxiliary electrode of claim 1, wherein:
the conductive layer comprises one of copper, and aluminum, or alloys of copper and aluminum; or wherein
the first and second carrier ion supply layers comprise one or more sources of lithium ions, sodium ions, potassium ions, magnesium ions, aluminum ions, and calcium ions.

6. The auxiliary electrode of claim 1, further comprising:
a conductive tab comprising a material that is electrically conductive and coupled to the conductive layer within the third region of the conductive layer.

7. A buffering system, comprising:
a secondary battery having major surfaces that oppose each other and electrical terminals, each of the electrical terminals coupled to one of a positive electrode and a negative electrode of the secondary battery, the secondary battery comprising a microporous separator between the negative electrode and the positive electrode that is permeated with an electrolyte in ionic contact with the negative electrode and the positive electrode, the negative electrode comprising anodically active silicon or an alloy thereof and having a coulombic capacity for carrier ions, the positive electrode comprising a cathodically active material and having a coulombic capacity for the carrier ions, the negative electrode coulombic capacity exceeding the positive electrode coulombic capacity;
an auxiliary electrode contacting the major surfaces of the secondary battery, the auxiliary electrode comprising:
a first separator layer comprising a material that is ionically permeable;
a conductive layer comprising a material that is electrically conductive and having a first surface contacting the first separator layer and a second surface opposing the first surface, wherein the second surface is segmented into a first region disposed at a first end of the conductive layer, a second region disposed at a second end of the conductive layer that opposes the first end, and a third region disposed between the first region and the second region;
a population of carrier ion supply layers each comprising a material that supplies the carrier ions for the positive electrode of the secondary battery, wherein a respective one of the carrier ion supply layers are disposed within the first region and the second region of the conductive layer;
a second separator layer comprising a material that is ionically permeable, wherein the second separator layer separates the carrier ion supply layers within the first region and the second region of the conductive layer from the major surfaces of the secondary battery; and
a conductive tab comprising a material that is electrically conductive, wherein the conductive tab has a first end coupled to the second surface of the conductive layer within the third region of the conductive layer, and a second end distal to the first end; and
an enclosure encapsulating the auxiliary electrode and the secondary battery, wherein the electrical terminals and the second end of the conductive tab electrically extend from a perimeter of the enclosure.

8. The buffer system of claim 7, wherein:
the enclosure comprises a first enclosure layer and a second enclosure layer, and
the auxiliary electrode and the secondary battery are disposed within a pouch formed in the first enclosure layer; or an electrolyte permeating the second separator layer.

9. The buffer system of claim 7, wherein:
the carrier ion supply layers comprise one or more sources of lithium ions, sodium ions, potassium ions, magnesium ions, aluminum ions, and calcium ions for the positive electrode of the secondary battery.

10. A method of buffering a secondary battery with carrier ions using an auxiliary electrode, the secondary battery having major surfaces that oppose each other and electrical terminals, each of the electrical terminals coupled to one of a positive electrode and a negative electrode of the secondary battery, the secondary battery comprising a microporous separator between the negative electrode and the positive electrode that is permeated with an electrolyte in ionic contact with the negative electrode and the positive electrode, the negative electrode comprising anodically active silicon or an alloy thereof and having a coulombic capacity for the carrier ions, the positive electrode comprising a cathodically active material and having a coulombic capacity for the carrier ions, the negative electrode coulombic capacity exceeding the positive electrode coulombic capacity, the method comprising:
placing the auxiliary electrode in contact with the major surfaces of the secondary battery to form an auxiliary subassembly, wherein the auxiliary electrode includes an electrically conductive layer, carrier ion supply layers disposed on the electrically conductive layer that are proximate to the major surfaces of the secondary battery, a separator layer disposed between the carrier ion supply layers and the major surfaces of the secondary battery, and an electrically conductive tab coupled to the electrically conductive layer;
installing the auxiliary subassembly in an enclosure, wherein the electrical terminals of the secondary battery and the electrically conductive tab of the auxiliary electrode electrically extend from a perimeter of the enclosure;
transferring the carrier ions from the positive electrode to the negative electrode to at least partially charge the secondary battery by applying a potential voltage across the electrical terminals of the secondary battery;
transferring the carrier ions from the carrier ion supply layers of the auxiliary electrode to at least one of the positive electrode and the negative electrode of the secondary battery by applying a potential voltage across the electrically conductive tab of the auxiliary electrode and one or more of the electrical terminals of the secondary battery; and
transferring the carrier ions from the positive electrode to the negative electrode to charge the secondary battery by applying a potential voltage across the electrical terminals of the secondary battery until the negative electrode has greater than 100% of the positive electrode coulombic capacity stored as the carrier ions.

11. The method of claim 10, further comprising:
opening the enclosure;
removing the auxiliary electrode from the secondary battery; and
resealing the enclosure to encapsulate the secondary battery; or
wherein
the enclosure comprises a first enclosure layer and a second enclosure layer,
installing the auxiliary subassembly in the enclosure comprises:
installing the auxiliary subassembly on the first enclosure layer;
installing the second enclosure layer on the first enclosure layer; and
sealing the first enclosure layer to the second enclosure layer along a sealing line to form the enclosure; and preferably wherein:
the first enclosure layer includes a pouch; and
installing the auxiliary subassembly on the first enclosure layer comprises:
installing the auxiliary subassembly in the pouch; and wherein
the method further comprises adding an electrolyte to the pouch.

12. The method of claim 10, wherein:
a ratio of the negative electrode coulombic capacity to the positive electrode coulombic capacity lies in a range of about 1.2:1 to about 5:1; or a ratio of a coulombic capacity of the auxiliary electrode to the positive electrode coulombic capacity lies in a range of about 2:1 to about 5:1, respectively, when cycled against a counter-electrode.

13. The method of claim 10, wherein:
the negative electrode comprises an anodically active material that includes silicon and contains a void volume fraction to accommodate volume expansion and contraction as the carrier ions are incorporated into or leave the negative electrode during charging and discharging cycles of the secondary battery; and preferably wherein
the void volume fraction of the anodically active material is about 0.1 to about 0.7; and preferably wherein
the anodically active material comprises macroporous, microporous, or mesoporous material layers, or a combination thereof.

14. The method of claim 10, wherein transferring the carrier ions from the carrier ion supply layers of the auxiliary electrode to at least one of the positive electrode and the negative electrode of the secondary battery further comprises:
transferring about 50% of the positive electrode coulombic capacity of the carrier ions to at least one of the positive electrode and the negative electrode; or
transferring about 60% of the positive electrode coulombic capacity of the carrier ions to at least one of the positive electrode and the negative electrode; or
transferring about 70% of the positive electrode coulombic capacity of the carrier ions to at least one of the positive electrode and the negative electrode; or
transferring about 80% of the positive electrode coulombic capacity of the carrier ions to at least one of the positive electrode and the negative electrode; or
transferring about 90% of the positive electrode coulombic capacity of the carrier ions to that least one of the positive electrode and the negative electrode; or
transferring about 100% of the positive electrode coulombic capacity of the carrier ions to at least one of the positive electrode and the negative electrode;
or
transferring about 1% to about 100% of the positive electrode coulombic capacity of the carrier ions to at least one of the positive electrode and the negative electrode.

15. The method of claim 10, wherein the carrier ion supply layers comprise one or more sources of lithium ions, sodium ions, potassium ions, magnesium ions, aluminum ions, and calcium ions for the positive electrode of the secondary battery.

## Patentansprüche

1. Hilfselektrode für eine Sekundärbatterie, wobei die Hilfselektrode Folgendes umfasst:
eine leitende Schicht, die eine erste Hauptoberfläche in einer X-Y-Ebene aufweist, wobei die leitende Schicht ein Material, das elektrisch leitend ist, umfasst und einen ersten Oberflächeninhalt aufweist,
eine erste Trägerionenzufuhrschicht und eine zweite Trägerionenzufuhrschicht, wobei jede der ersten Trägerionenzufuhrschicht und der zweiten Trägerionenzufuhrschicht ein Material umfasst, das Trägerionen für eine Elektrode der Sekundärbatterie zuführt, die erste Trägerionenzufuhrschicht einen ersten Bereich der ersten Hauptoberfläche der leitenden Schicht abdeckt und die zweite Trägerionenzufuhrschicht einen zweiten Bereich der ersten Hauptoberfläche der leitenden Schicht abdeckt;
wobei der erste Bereich und der zweite Bereich durch einen dritten Bereich der leitenden Schicht getrennt sind, der sich zwischen dem ersten Bereich und dem zweiten Bereich erstreckt; wobei der dritte Bereich konfiguriert ist, in einer Y-Achsen-Richtung derart gefaltet zu sein, dass in einer gefalteten Konfiguration der erste Bereich und der zweite Bereich im Wesentlichen parallel sind; und der dritte Bereich in der gefalteten Konfiguration zu dem ersten Bereich und dem zweiten Bereich im Wesentlichen senkrecht ist; und eine Separatorschicht, die an der ersten Trägerionenzufuhrschicht und der zweiten Trägerionenzufuhrschicht angeordnet ist.

2. Hilfselektrode nach Anspruch 1, wobei in der gefalteten Konfiguration ein Umfang der ersten Trägerionenzufuhrschicht im Wesentlichen auf einen Umfang der zweiten Trägerionenzufuhrschicht ausgerichtet ist oder
wobei ein kombinierter Oberflächeninhalt der ersten Trägerionenzufuhrschicht und der zweiten Trägerionenzufuhrschicht größer als ein Oberflächeninhalt des dritten Bereichs ist.

3. Hilfselektrode nach Anspruch 1, wobei die Separatorschicht eine erste Separatorschicht umfasst, die an der ersten Trägerionenzufuhrschicht angeordnet und mit ihr koextensiv ist; und bevorzugt die Separatorschicht eine zweite Separatorschicht, die an der zweiten Trägerionenzufuhrschicht angeordnet und mit ihr koextensiv ist; umfasst und bevorzugt eine dritte Separatorschicht umfasst, wobei die dritte Separatorschicht an einer zweiten Hauptoberfläche der leitenden Schicht angeordnet ist, die der ersten Hauptoberfläche gegenüberliegt.

4. Hilfselektrode nach Anspruch 3, wobei die erste Separatorschicht, die zweite Separatorschicht und/oder die dritte Separatorschicht kontinuierlich sind oder
die erste Separatorschicht und die dritte Separatorschicht um mindestens einen Abschnitt eines Umfangs der ersten Separatorschicht und der dritten Separatorschicht mechanisch miteinander verbunden sind oder
die zweite Separatorschicht und die dritte Separatorschicht um mindestens einen Abschnitt eines Umfangs der zweiten Separatorschicht und der dritten Separatorschicht mechanisch miteinander verbunden sind.

5. Hilfselektrode nach Anspruch 1, wobei:
die leitende Schicht eines von Kupfer und Aluminium oder Legierungen von Kupfer und Aluminium umfasst oder
die erste und die zweite Trägerionenzufuhrschicht eine oder mehrere Quellen von Lithiumionen, Natriumionen, Kaliumionen, Magnesiumionen, Aluminiumionen und Kalziumionen umfassen.

6. Hilfselektrode nach Anspruch 1, die ferner Folgendes umfasst:
einen leitenden Streifen, der ein Material, das elektrisch leitend ist, umfasst und an die leitende Schicht im dritten Bereich der leitenden Schicht gekoppelt ist.

7. Puffersystem, das Folgendes umfasst:
eine Sekundärbatterie, die Hauptoberflächen, die einander gegenüberliegen, und elektrische Anschlüsse aufweist, wobei jeder der elektrischen Anschlüsse an eine einer positiven Elektrode und einer negativen Elektrode der Sekundärbatterie gekoppelt ist, die Sekundärbatterie einen mikroporösen Separator zwischen der negativen Elektrode und der positiven Elektrode umfasst, der mit einem Elektrolyt in Ionenkontakt mit der negativen Elektrode und der positiven Elektrode durchsetzt ist, die negative Elektrode anodisch aktives Silizium oder eine Legierung davon umfasst und eine Coulomb-Kapazität für Trägerionen aufweist, die positive Elektrode ein kathodisch aktives Material umfasst und eine Coulomb-Kapazität für die Trägerionen aufweist und die Coulomb-Kapazität der negativen Elektrode die Coulomb-Kapazität der positiven Elektrode überschreitet;
eine Hilfselektrode, die die Hauptoberflächen der Sekundärbatterie kontaktiert, wobei die Hilfselektrode Folgendes umfasst:
eine erste Separatorschicht, die ein Material umfasst, das ionendurchlässig ist;
eine leitende Schicht, die ein Material, das elektrisch leitend ist, umfasst und eine erste Oberfläche, die die erste Separatorschicht kontaktiert, und eine zweite Oberfläche, die der ersten Oberfläche gegenüberliegt, aufweist, wobei die zweite Oberfläche in einen ersten Bereich, der bei einem ersten Ende der leitenden Schicht angeordnet ist, einen zweiten Bereich, der bei einem zweiten Ende der leitenden Schicht, das dem ersten Ende gegenüberliegt, angeordnet ist, und einen dritten Bereich, der zwischen dem ersten Bereich und dem zweiten Bereich angeordnet ist, segmentiert ist;
eine Population von Trägerionenzufuhrschichten, die jeweils ein Material umfassen, das die Trägerionen für die positive Elektrode der Sekundärbatterie zuführt, wobei eine jeweilige der Trägerionenzufuhrschichten in dem ersten Bereich und dem zweiten Bereich der leitenden Schicht angeordnet ist;
eine zweite Separatorschicht, die ein Material umfasst, das ionendurchlässig ist, wobei die zweite Separatorschicht die Trägerionenzufuhrschichten in dem ersten Bereich und dem zweiten Bereich der leitenden Schicht von den Hauptoberflächen der Sekundärbatterie trennt; und
einen leitenden Streifen, der ein Material, das elektrisch leitend ist, umfasst, wobei der leitende Streifen ein erstes Ende, das an die zweite Oberfläche der leitenden Schicht im dritten Bereich der leitenden Schicht gekoppelt ist, und ein zweites Ende, das vom ersten Ende abgelegen ist, aufweist; und
eine Umschließung, die die Hilfselektrode und die Sekundärbatterie kapselt, wobei die elektrischen Anschlüsse und das zweite Ende des leitenden Streifens sich von einem Umfang der Umschließung elektrisch erstrecken.

8. Puffersystem nach Anspruch 7, wobei:
die Umschließung eine erste Umschließungsschicht und eine zweite Umschließungsschicht umfasst und
die Hilfselektrode und die Sekundärbatterie in einem Beutel, der in der ersten Umschließungsschicht gebildet ist; oder einem Elektrolyten, der die zweite Separatorschicht durchsetzt, angeordnet sind.

9. Puffersystem nach Anspruch 7, wobei:
die Trägerionenzufuhrschichten eine oder mehrere Quellen von Lithiumionen, Natriumionen, Kaliumionen, Magnesiumionen, Aluminiumionen und Kalziumionen für die positive Elektrode der Sekundärbatterie umfassen.

10. Verfahren zum Puffern einer Sekundärbatterie mit Trägerionen unter Verwendung einer Hilfselektrode, wobei die Sekundärbatterie Hauptoberflächen, die einander gegenüberliegen, und elektrische Anschlüsse aufweist, jeder der elektrischen Anschlüsse an eine einer positiven Elektrode und einer negativen Elektrode der Sekundärbatterie gekoppelt ist, die Sekundärbatterie einen mikroporösen Separator zwischen der negativen Elektrode und der positiven Elektrode umfasst, der mit einem Elektrolyt in Ionenkontakt mit der negativen Elektrode und der positiven Elektrode durchsetzt ist, die negative Elektrode anodisch aktives Silizium oder eine Legierung davon umfasst und eine Coulomb-Kapazität für die Trägerionen aufweist, die positive Elektrode ein kathodisch aktives Material umfasst und eine Coulomb-Kapazität für die Trägerionen aufweist, die Coulomb-Kapazität der negativen Elektrode die Coulomb-Kapazität der positiven Elektrode überschreitet und das Verfahren Folgendes umfasst:
Anordnen der Hilfselektrode in Kontakt mit den Hauptoberflächen der Sekundärbatterie, um eine Hilfsbaugruppe zu bilden, wobei die Hilfselektrode eine elektrisch leitende Schicht, Trägerionenzufuhrschichten, die an der elektrisch leitenden Schicht angeordnet sind und in der Nähe der Hauptoberflächen der Sekundärbatterie sind, eine Separatorschicht, die zwischen den Trägerionenzufuhrschichten und den Hauptoberflächen der Sekundärbatterie angeordnet ist, und einen elektrisch leitenden Streifen, der an die elektrisch leitende Schicht gekoppelt ist, enthält;
Installieren der Hilfsbaugruppe in einer Umschließung, wobei die elektrischen Anschlüsse der Sekundärbatterie und der elektrisch leitenden Streifen der Hilfselektrode sich von einem Umfang der Umschließung elektrisch erstrecken;
Übertragen der Trägerionen von der positiven Elektrode zur negativen Elektrode, um die Sekundärbatterie mindestens teilweise zu laden, durch Anlegen einer Potentialspannung über die elektrischen Anschlüsse der Sekundärbatterie;
Übertragen der Trägerionen von den Trägerionenzufuhrschichten der Hilfselektrode zu mindestens einer der positiven Elektrode und der negativen Elektrode der Sekundärbatterie durch Anlegen einer Potentialspannung über den elektrisch leitenden Streifen der Hilfselektrode und einen oder mehrere der elektrischen Anschlüsse der Sekundärbatterie; und
Übertragen der Trägerionen von der positiven Elektrode zur negativen Elektrode, um die Sekundärbatterie durch Anlegen einer Potentialspannung über die elektrischen Anschlüsse der Sekundärbatterie zu laden, bis die negative Elektrode mehr als 100 % der positiven Elektroden-Coulomb-Kapazität aufweist, die als die Trägerionen gespeichert ist.

11. Verfahren nach Anspruch 10, das ferner folgendes umfasst:
Öffnen der Umschließung;
Entfernen der Hilfselektrode von der Sekundärbatterie und
Wiederversiegeln der Umschließung, um die Sekundärbatterie zu kapseln; oder wobei
die Umschließung eine erste Umschließungsschicht und eine zweite Umschließungsschicht umfasst,
das Installieren der Hilfsbaugruppe in der Umschließung Folgendes umfasst:
Installieren der Hilfsbaugruppe an der ersten Umschließungsschicht;
Installieren der zweiten Umschließungsschicht an der ersten Umschließungsschicht und
Versiegeln der ersten Umschließungsschicht an der zweiten Umschließungsschicht entlang einer Dichtungslinie, um die Umschließung zu bilden; und wobei bevorzugt:
die erste Umschließungsschicht einen Beutel enthält; und
das Installieren der Hilfsbaugruppe an der ersten Umschließungsschicht Folgendes umfasst:
Installieren der Hilfsbaugruppe im Beutel und wobei
das Verfahren ferner ein Hinzufügen eines Elektrolyten zum Beutel umfasst.

12. Verfahren nach Anspruch 10, wobei:
beim zyklischen Durchlaufen gegen eine Gegenelektrode ein Verhältnis der negativen Elektroden-Coulomb-Kapazität zur positiven Elektroden-Coulomb-Kapazität in einem Bereich von etwa 1,2:1 bis etwa 5:1 liegt bzw. ein Verhältnis einer Coulomb-Kapazität der Hilfselektrode zur positiven Elektroden-Coulomb-Kapazität in einem Bereich von etwa 2:1 bis etwa 5:1 liegt.

13. Verfahren nach Anspruch 10, wobei:
die negative Elektrode ein anodisch aktives Material umfasst, das Silizium enthält und einen Hohlraumvolumenanteil begrenzt, um ein Volumenausdehnen und -zusammenziehen zu berücksichtigen, wenn die Trägerionen während Lade- und EntladeZyklen der Sekundärbatterie in die negative Elektrode aufgenommen werden oder sie verlassen; und wobei bevorzugt
der Hohlraumvolumenanteil des anodisch aktiven Materials im Bereich von etwa 0,1 bis etwa 0,7 liegt und wobei bevorzugt
das anodisch aktive Material makroporöse, mikroporöse oder mesoporöse Materialschichten oder eine Kombination davon umfasst.

14. Verfahren nach Anspruch 10, wobei das Übertragen der Trägerionen von den Trägerionenzufuhrschichten der Hilfselektrode zu mindestens einer der positiven Elektrode und der negativen Elektrode der Sekundärbatterie ferner Folgendes umfasst:
Übertragen von etwa 50 % der positiven Elektroden-Coulomb-Kapazität der Trägerionen zu mindestens einer der positiven Elektrode und der negativen Elektrode oder
Übertragen von etwa 60 % der positiven Elektroden-Coulomb-Kapazität der Trägerionen zu mindestens einer der positiven Elektrode und der negativen Elektrode oder
Übertragen von etwa 70 % der positiven Elektroden-Coulomb-Kapazität der Trägerionen zu mindestens einer der positiven Elektrode und der negativen Elektrode oder
Übertragen von etwa 80 % der positiven Elektroden-Coulomb-Kapazität der Trägerionen zu mindestens einer der positiven Elektrode und der negativen Elektrode oder
Übertragen von etwa 90 % der positiven Elektroden-Coulomb-Kapazität der Trägerionen zu mindestens einer der positiven Elektrode und der negativen Elektrode oder
Übertragen von etwa 100 % der positiven Elektroden-Coulomb-Kapazität der Trägerionen zu mindestens einer der positiven Elektrode und der negativen Elektrode oder
Übertragen von im Bereich von etwa 1 % bis etwa 100 % der positiven Elektroden-Coulomb-Kapazität der Trägerionen zu mindestens einer der positiven Elektrode und der negativen Elektrode.

15. Verfahren nach Anspruch 10, wobei die Trägerionenzufuhrschichten eine oder mehrere Quellen von Lithiumionen, Natriumionen, Kaliumionen, Magnesiumionen, Aluminiumionen und Kalziumionen für die positive Elektrode der Sekundärbatterie umfassen.

## Revendications

1. Électrode auxiliaire pour une batterie secondaire, l'électrode auxiliaire comprenant :
une couche conductrice ayant une première surface principale dans un plan X-Y, la couche conductrice comprenant un matériau qui est électriquement conducteur et ayant une première aire de surface,
une première couche d'alimentation en ions porteurs et une seconde couche d'alimentation en ions porteurs, chacune de la première couche d'alimentation en ions porteurs et de la seconde couche d'alimentation en ions porteurs comprenant un matériau qui fournit des ions porteurs pour une électrode de la batterie secondaire, dans laquelle la première couche d'alimentation en ions porteurs couvre une première région de la première surface principale de la couche conductrice et la seconde couche d'alimentation en ions porteurs couvre une deuxième région de la première surface principale de la couche conductrice ;
dans laquelle la première région et la deuxième région sont séparées par une troisième région de la couche conductrice s'étendant entre la première région et la deuxième région ; la troisième région étant configurée pour être pliée le long d'une direction d'axe Y de telle sorte que dans une configuration pliée, la première région et la deuxième région sont sensiblement parallèles ; et la troisième région étant sensiblement perpendiculaire à la première région et à la deuxième région dans la configuration pliée ; et une couche séparatrice étant disposée sur la première couche d'alimentation en ions porteurs et la seconde couche d'alimentation en ions porteurs.

2. Électrode auxiliaire selon la revendication 1, dans laquelle dans la configuration pliée, un périmètre de la première couche d'alimentation en ions porteurs est aligné sensiblement avec un périmètre de la seconde couche d'alimentation en ions porteurs ; ou
dans laquelle une aire de surface combinée de la première couche d'alimentation en ions porteurs et de la seconde couche d'alimentation en ions porteurs est supérieure à une aire de surface de la troisième région.

3. Électrode auxiliaire selon la revendication 1, dans laquelle la couche séparatrice comprend une première couche séparatrice disposée sur et coextensive avec la première couche d'alimentation en ions porteurs ; et de préférence dans laquelle la couche séparatrice comprend une deuxième couche séparatrice disposée sur et coextensive avec la seconde couche d'alimentation en ions porteurs ; et de préférence une troisième couche séparatrice, la troisième couche séparatrice étant disposée sur une seconde surface principale de la couche conductrice qui est opposée à la première surface principale.

4. Électrode auxiliaire selon la revendication 3, dans laquelle la première couche séparatrice, la deuxième couche séparatrice et/ou la troisième couche séparatrice sont continues ; ou dans laquelle
la première couche séparatrice et la troisième couche séparatrice sont liées mécaniquement ensemble autour d'au moins une partie d'un périmètre de la première couche séparatrice et de la troisième couche séparatrice ; ou dans laquelle
la deuxième couche séparatrice et la troisième couche séparatrice sont liées mécaniquement ensemble autour d'au moins une partie d'un périmètre de la deuxième couche séparatrice et de la troisième couche séparatrice.

5. Électrode auxiliaire selon la revendication 1, dans laquelle :
la couche conductrice comprend l'un du cuivre et de l'aluminium, ou des alliages de cuivre et d'aluminium ; ou dans laquelle
les première et seconde couches d'alimentation en ions porteurs comprennent une ou plusieurs sources d'ions lithium, d'ions sodium, d'ions potassium, d'ions magnésium, d'ions aluminium et d'ions calcium.

6. Électrode auxiliaire selon la revendication 1, comprenant en outre :
une languette conductrice comprenant un matériau qui est électriquement conducteur et couplée à la couche conductrice à l'intérieur de la troisième région de la couche conductrice.

7. Système de mise en tampon, comprenant :
une batterie secondaire ayant des surfaces principales qui sont opposées l'une à l'autre et des bornes électriques, chacune des bornes électriques étant couplée à l'une d'une électrode positive et d'une électrode négative de la batterie secondaire, la batterie secondaire comprenant un séparateur microporeux entre l'électrode négative et l'électrode positive qui est imprégné d'un électrolyte en contact ionique avec l'électrode négative et l'électrode positive, l'électrode négative comprenant du silicium anodiquement actif ou un alliage de celui-ci et ayant une capacité coulombique pour des ions porteurs, l'électrode positive comprenant un matériau cathodiquement actif et ayant une capacité coulombique pour les ions porteurs, la capacité coulombique d'électrode négative dépassant la capacité coulombique d'électrode positive ;
une électrode auxiliaire en contact avec les surfaces principales de la batterie secondaire, l'électrode auxiliaire comprenant :
une première couche séparatrice comprenant un matériau qui est ioniquement perméable ;
une couche conductrice comprenant un matériau qui est électriquement conducteur et ayant une première surface en contact avec la première couche séparatrice et une seconde surface opposée à la première surface, dans lequel la seconde surface est segmentée en une première région disposée au niveau d'une première extrémité de la couche conductrice, une deuxième région disposée au niveau d'une seconde extrémité de la couche conductrice qui est opposée à la première extrémité, et une troisième région disposée entre la première région et la deuxième région ;
une population de couches d'alimentation en ions porteurs comprenant chacune un matériau qui fournit les ions porteurs pour l'électrode positive de la batterie secondaire, dans lequel une couche respective des couches d'alimentation en ions porteurs est disposée à l'intérieur de la première région et de la deuxième région de la couche conductrice ;
une deuxième couche séparatrice comprenant un matériau qui est ioniquement perméable, dans lequel la deuxième couche séparatrice sépare les couches d'alimentation en ions porteurs à l'intérieur de la première région et de la deuxième région de la couche conductrice des surfaces principales de la batterie secondaire ; et
une languette conductrice comprenant un matériau qui est électriquement conducteur, dans lequel la languette conductrice a une première extrémité couplée à la seconde surface de la couche conductrice à l'intérieur de la troisième région de la couche conductrice, et une seconde extrémité distale par rapport à la première extrémité ; et
une enceinte encapsulant l'électrode auxiliaire et la batterie secondaire, dans lequel les bornes électriques et la seconde extrémité de la languette conductrice s'étendent électriquement à partir d'un périmètre de l'enceinte.

8. Système de tampon selon la revendication 7, dans lequel :
l'enceinte comprend une première couche d'enceinte et une seconde couche d'enceinte, et
l'électrode auxiliaire et la batterie secondaire sont disposées à l'intérieur d'une poche formée dans la première couche d'enceinte ; ou un électrolyte passant dans la deuxième couche séparatrice.

9. Système de tampon selon la revendication 7, dans lequel :
les couches d'alimentation en ions porteurs comprennent une ou plusieurs sources d'ions lithium, d'ions sodium, d'ions potassium, d'ions magnésium, d'ions aluminium et d'ions calcium pour l'électrode positive de la batterie secondaire.

10. Procédé de mise en tampon d'une batterie secondaire avec des ions porteurs à l'aide d'une électrode auxiliaire, la batterie secondaire ayant des surfaces principales qui sont opposées l'une à l'autre et des bornes électriques, chacune des bornes électriques étant couplée à l'une d'une électrode positive et d'une électrode négative de la batterie secondaire, la batterie secondaire comprenant un séparateur microporeux entre l'électrode négative et l'électrode positive qui est imprégné d'un électrolyte en contact ionique avec l'électrode négative et l'électrode positive, l'électrode négative comprenant du silicium anodiquement actif ou un alliage de celui-ci et ayant une capacité coulombique pour les ions porteurs, l'électrode positive comprenant un matériau cathodiquement actif et ayant une capacité coulombique pour les ions porteurs, la capacité coulombique d'électrode négative dépassant la capacité coulombique d'électrode positive, le procédé comprenant :
le placement de l'électrode auxiliaire en contact avec les surfaces principales de la batterie secondaire pour former un sous-ensemble auxiliaire, dans lequel l'électrode auxiliaire inclut une couche électriquement conductrice, des couches d'alimentation en ions porteurs disposées sur la couche électriquement conductrice qui sont à proximité des surfaces principales de la batterie secondaire, une couche séparatrice disposée entre les couches d'alimentation en ions porteurs et les surfaces principales de la batterie secondaire, et une languette électriquement conductrice couplée à la couche électriquement conductrice ;
l'installation du sous-ensemble auxiliaire dans une enceinte, dans lequel les bornes électriques de la batterie secondaire et la languette électriquement conductrice de l'électrode auxiliaire s'étendent électriquement à partir d'un périmètre de l'enceinte ;
le transfert des ions porteurs de l'électrode positive à l'électrode négative pour charger au moins partiellement la batterie secondaire en appliquant une tension potentielle à travers les bornes électriques de la batterie secondaire ;
le transfert des ions porteurs des couches d'alimentation en ions porteurs de l'électrode auxiliaire à au moins l'une de l'électrode positive et de l'électrode négative de la batterie secondaire en appliquant une tension potentielle à travers la languette électriquement conductrice de l'électrode auxiliaire et une ou plusieurs des bornes électriques de la batterie secondaire ; et
le transfert des ions porteurs de l'électrode positive à l'électrode négative pour charger la batterie secondaire en appliquant une tension potentielle à travers les bornes électriques de la batterie secondaire jusqu'à ce que l'électrode négative ait plus de 100 % de la capacité coulombique d'électrode positive stockée en tant qu'ions porteurs.

11. Procédé selon la revendication 10, comprenant en outre :
l'ouverture de l'enceinte ;
le retrait de l'électrode auxiliaire de la batterie secondaire ; et
le rescellement de l'enceinte pour encapsuler la batterie secondaire ; ou dans lequel
l'enceinte comprend une première couche d'enceinte et une seconde couche d'enceinte,
l'installation du sous-ensemble auxiliaire dans l'enceinte comprend :
l'installation du sous-ensemble auxiliaire sur la première couche d'enceinte ;
l'installation de la seconde couche d'enceinte sur la première couche d'enceinte ; et
le scellement de la première couche d'enceinte à la seconde couche d'enceinte le long d'une ligne de scellement pour former l'enceinte ; et de préférence dans lequel :
la première couche d'enceinte inclut une poche ; et
l'installation du sous-ensemble auxiliaire sur la première couche d'enceinte comprend :
l'installation du sous-ensemble auxiliaire dans la poche ; et dans lequel
le procédé comprend en outre l'ajout d'un électrolyte à la poche.

12. Procédé selon la revendication 10, dans lequel :
un rapport de la capacité coulombique d'électrode négative à la capacité coulombique d'électrode positive se trouve dans une plage d'environ 1,2:1 à environ 5:1 ; ou un rapport d'une capacité coulombique de l'électrode auxiliaire à la capacité coulombique d'électrode positive se trouve dans une plage d'environ 2:1 à environ 5:1, respectivement, lorsqu'il est soumis à un cycle contre une contre-électrode.

13. Procédé selon la revendication 10, dans lequel :
l'électrode négative comprend un matériau anodiquement actif qui inclut du silicium et contient une fraction de volume de vide pour s'adapter à une expansion et à une contraction de volume lorsque les ions porteurs sont incorporés dans ou quittent l'électrode négative pendant des cycles de charge et de décharge de la batterie secondaire ; et de préférence dans lequel
la fraction de volume de vide du matériau anodiquement actif est d'environ 0,1 à environ 0,7 ; et de préférence dans lequel
le matériau anodiquement actif comprend des couches de matériau macroporeux, microporeux ou mésoporeux, ou une combinaison de celles-ci.

14. Procédé selon la revendication 10, dans lequel le transfert des ions porteurs des couches d'alimentation en ions porteurs de l'électrode auxiliaire à au moins l'une de l'électrode positive et de l'électrode négative de la batterie secondaire comprend en outre :
le transfert d'environ 50 % de la capacité coulombique d'électrode positive des ions porteurs à au moins l'une de l'électrode positive et de l'électrode négative ; ou
le transfert d'environ 60 % de la capacité coulombique d'électrode positive des ions porteurs à au moins l'une de l'électrode positive et de l'électrode négative ; ou
le transfert d'environ 70 % de la capacité coulombique d'électrode positive des ions porteurs à au moins l'une de l'électrode positive et de l'électrode négative ; ou
le transfert d'environ 80 % de la capacité coulombique d'électrode positive des ions porteurs à au moins l'une de l'électrode positive et de l'électrode négative ; ou
le transfert d'environ 90 % de la capacité coulombique d'électrode positive des ions porteurs à au moins l'une de l'électrode positive et de l'électrode négative ; ou
le transfert d'environ 100 % de la capacité coulombique d'électrode positive des ions porteurs à au moins l'une de l'électrode positive et de l'électrode négative ; ou
le transfert d'environ 1 % à environ 100 % de la capacité coulombique d'électrode positive des ions porteurs à au moins l'une de l'électrode positive et de l'électrode négative.

15. Procédé selon la revendication 10, dans lequel les couches d'alimentation en ions porteurs comprennent une ou plusieurs sources d'ions lithium, d'ions sodium, d'ions potassium, d'ions magnésium, d'ions aluminium, et d'ions calcium pour l'électrode positive de la batterie secondaire.
